# EUROPÄISCHE PATENTSCHRIFT

(11) **EP 4 436 163 B1**
(45) Veröffentlichungstag und Bekanntmachung des Hinweises auf die Patenterteilung: **06.08.2025**
(21) Anmeldenummer: 24163105.0
(22) Anmeldetag: 13.03.2024
(51) Int. Cl.: H04N 9/31, B60Q 1/08, B60Q 1/14, G06T 17/20, G06T 19/00

(54) **VERFAHREN ZUM BETRIEB EINER SCHEINWERFERVORRICHTUNG EINES KRAFTFAHRZEUGS UND KRAFTFAHRZEUG**
METHOD FOR OPERATING A HEADLIGHT DEVICE OF A MOTOR VEHICLE AND MOTOR VEHICLE
PROCÉDÉ DE FONCTIONNEMENT D'UN DISPOSITIF DE PHARE D'UN VÉHICULE AUTOMOBILE ET VÉHICULE AUTOMOBILE

(30) Priorität: 23.03.2023 DE 102023107334
(43) Veröffentlichungstag der Anmeldung: 25.09.2024
(73) Patentinhaber: AUDI AG, 85057 Ingolstadt (DE)
(72) Erfinder: Armbruster, Tilman, 85057 Ingolstadt (DE); Veni, Quirin, 85053 Ingolstadt (DE)
(74) Vertreter: Lindner Blaumeier Patent- und Rechtsanwälte

(56) Entgegenhaltungen:
- DE-B3- 102021 118 839
- US-A1- 2018 118 099
- YANG LIU ET AL: "3D virtual garment design system", COMPUTER SUPPORTED COOPERATIVE WORK IN DESIGN, 2008. CSCWD 2008. 12TH INTERNATIONAL CONFERENCE ON, IEEE, PISCATAWAY, NJ, USA, 16 April 2008 (2008-04-16), pages 733 - 736, XP031268953, ISBN: 978-1-4244-1650-9

## Beschreibung

Die Erfindung betrifft ein Verfahren zum Betrieb einer Scheinwerfervorrichtung eines Kraftfahrzeugs, wobei die Scheinwerfervorrichtung eine Projektionseinrichtung und eine Steuereinheit, die zur Ansteuerung der Projektionseinrichtung zur Projektion eines vorgegebenen Lichtmusters in einem vorbestimmten Projektionsbereich der Projektionseinrichtung ausgebildet ist, aufweist, wobei das Lichtmuster in einem Polygonbetriebsmodus der Scheinwerfervorrichtung ein Polygonnetz mit durch Projektionspunkte als Eckpunkte definierten, Polygonkanten aufweisenden Polygonflächen umfasst und den Polygonflächen wenigstens teilweise unterschiedliche Projektionshelligkeiten zugeordnet sind. Daneben betrifft die Erfindung ein Kraftfahrzeug.

Lichtfunktionen in Kraftfahrzeugen dienen herkömmlich auf bekannte Art und Weise der Ausleuchtung des Bereichs vor dem Kraftfahrzeug für den bei Nacht fahrenden Fahrer sowie zur Kenntlichmachung des Kraftfahrzeugs für andere Verkehrsteilnehmer, insbesondere bei Nacht. Hierfür weisen Kraftfahrzeuge beispielsweise Frontscheinwerfer zur Ausleuchtung des Bereichs vor dem Kraftfahrzeug auf, welche beispielsweise in mehreren Betriebsmodi wie Abblendlicht, Fernlicht, Tagfahrlicht und dergleichen betrieben werden können. Auch sind Kraftfahrzeuge standardmäßig mit Heckleuchten, Fahrtrichtungsanzeigern, Bremsleuchten und dergleichen ausgestattet.

Insbesondere für Frontscheinwerfer wurden im Stand der Technik auch bereits weitere Funktionalitäten vorgeschlagen, um dem Fahrer und/oder anderen Verkehrsteilnehmern Assistenz zu gewähren, die Sicherheit zu erhöhen und das Licht interessanter beziehungsweise komfortabler betrachtbar zu gestalten. Besonders hilfreich in diesem Zusammenhang ist die Entwicklung von Scheinwerfern, deren gesamter Ausleuchtbereich in Segmente unterteilt ist, welche unabhängig ansteuerbar sind, das bedeutet, unabhängig ausleuchtbar sind. Hierfür ist es beispielsweise bekannt, Optiken und/oder spezielle Lichtquellenanordnungen einzusetzen, beispielsweise Mikrospiegelanordnungen, bei denen jeder Mikrospiegel einem Segment zugeordnet sein kann, und/oder LED-Matrizen. Derartige Scheinwerfer können auch als digitales Matrix-Licht bezeichnet werden und beispielsweise genutzt werden, um durch Deaktivierung bestimmter Segmente die Blendung von anderen Verkehrsteilnehmern zu vermeiden und Funktionen wie Navigationslicht und Kurvenlicht anzubieten.

EP 3 476 653 A1 betrifft eine Beleuchtungseinrichtung für ein Kraftfahrzeug. Die Beleuchtungseinrichtung umfasst eine erste Beleuchtungseinheit zur Aussendung von Licht eines ersten Lichtverteilungsmusters und eine zweite Beleuchtungseinheit zum Aussenden von Licht eines zweiten Lichtverteilungsmusters. Um eine Positionsabweichung von einer bestimmten Zielposition auf einer Straßenoberfläche korrigieren zu können, können das erste Lichtverteilungsmuster und das zweite Lichtverteilungsmuster ein Hauptmuster und ein Hilfsmuster mit einer Assistenzfunktion aufweisen.

US 2020/0355347 A1 offenbart eine Beleuchtungseinrichtung zur Aussendung von Mustern auf eine Straßenoberfläche als Fahrtrichtungsanzeiger.

DE 10 2021 118 839 B3 betrifft ein Fahrzeug mit einer Scheinwerfervorrichtung. Die Scheinwerfervorrichtung umfasst eine Projektionseinrichtung und eine Steuereinheit, wobei die Steuereinheit dazu eingerichtet ist, die Projektionseinrichtung zur Projektion eines vorgegebenen Lichtmusters in einem vorbestimmten Projektionsbereich der Projektionseinrichtung anzusteuern. Hierbei wird in der Steuereinheit eine Punktekarte gespeichert, in der Projektionspunkte an jeweiligen Projektionspunktekoordinaten in dem vorbestimmten Projektionsbereich definiert sind. Die Steuereinheit ist dazu eingerichtet, eine Lage der Projektionspunktekoordinaten nach einem vorbestimmten Verzerrungsverfahren in Abhängigkeit von einem erfassten Höhenverlauf einer Oberfläche anzupassen und das Lichtmuster nach einem vorbestimmten Zerlegungsverfahren in zumindest eine polygonale Fläche zu zerlegen, deren Eckpunkte durch einen jeweiligen der Projektionspunkte definiert sind. Mit einer Sensoreinrichtung kann die Topographie der Oberfläche, auf welcher sich der bestimmte Projektionsbereich befindet, erfasst werden, wobei das Vorverzerrungsverfahren den Höhenverlauf der Oberfläche kompensiert, so dass das Lichtmuster für den Fahrer unabhängig von dem Höhenverlauf in der vorbestimmten Form dargestellt wird. Die Steuereinheit kann ferner dazu eingerichtet sein, der zumindest einen polygonalen Fläche nach dem vorbestimmten Zerlegungsverfahren eine Beleuchtungsstufe zuzuweisen.

Es kann also gesagt werden, dass Projektionseinrichtungen, die Polygonnetze auf einen durch ein Kraftfahrzeug befahrenen Untergrund projizieren, vorgeschlagen wurden. Allerdings beschränken sich die Anwendungsmöglichkeiten bislang auf wenige Spezialfälle, wobei beispielsweise in DE 10 2020 007 760 A1 vorgeschlagen wurde, ein Lichtmuster aus wenigstens zwei unterschiedlich stark beleuchteten polygonalen Flächen zu nutzen, um Fahrbahnmarkierungen zu klassifizieren.

DE 10 2011 081 382 A1 betrifft ein Verfahren und eine Vorrichtung zum Ändern einer Lichtaussendung zumindest eines Scheinwerfers eines Fahrzeugs. Dabei wird vorgeschlagen, eine Position eines Objektes vor oder neben dem Fahrzeug zu ermitteln und die Lichtaussendung von zumindest einem Scheinwerfer auf das Objekt unter Verwendung des entsprechenden Positionssignals zu verändern, wobei beim Verändern ein sich veränderndes Beleuchtungsmuster auf das Objekt oder in ein Umfeld des Objekts ausgestrahlt wird. So soll eine technisch sehr einfach auszuführende Warnung des Fahrers des Fahrzeugs durchgeführt werden. Das Beleuchtungsmuster kann einen Teilbereich mit einer hohen und einen anderen Teilbereich mit einer niedrigen Helligkeit aufweisen, wobei eine Bewegung des helleren Teilbereichs stattfindet. Durch unterschiedliche Beleuchtungsmuster kann der Fahrer unterschiedliche Gefährdungen erlernen und somit schnelle Reaktionszeiten gegenüber Gefährdungen aufbauen.

YANG LIU ET AL: "3D virtual garment design system", 12th INTERNATIONAL CONFERENCE ON COMPUTER SUPPORTED COOPERATIVE WORK IN DESIGN, 2008, IEEE, PISCATAWAY, NJ, USA, 16. April 2008, Seiten 733-736, ISBN: 978-1-4244-1650-9, betrifft eine 3D-Kleidungssimulation basierend auf einem Netz mit einem Masse-Feder-Modell.

US 2018/118099 A1 betrifft eine Bildprojektionsvorrichtung, die in einen Scheinwerfer eingebaut ist, um ein Bild anzuzeigen, das auf der Grundlage der Form und des Reflexionsvermögens der Straßenoberfläche korrigiert wird.

Der Erfindung liegt die Aufgabe zugrunde, einen verbesserten Betrieb einer Scheinwerfervorrichtung mit einer Projektionseinrichtung, die Polygonnetze auf den befahrenen Untergrund projizieren kann, anzugeben.

Zur Lösung dieser Aufgabe sind erfindungsgemäß ein Verfahren und ein Kraftfahrzeug mit den Merkmalen der unabhängigen Ansprüche vorgesehen. Vorteilhafte Weiterbildungen ergeben sich aus den Unteransprüchen.

Bei einem Verfahren der eingangs genannten Art ist erfindungsgemäß vorgesehen, dass wenigstens einem Polygonmerkmal der Polygonflächen, insbesondere wenigstens den Eckpunkten, wenigstens eine physikalische Eigenschaft zugeordnet wird, wobei zur dynamischen Anpassung des Lichtmusters in einem Dynamiksubmodus des Polygonbetriebsmodus:
- zeitaktuelle Betriebsdaten des Kraftfahrzeugs und/oder Messdaten des Kraftfahrzeugs aufgenommen werden, die den Fahrzustand des Kraftfahrzeugs und/oder für die physikalische Eigenschaft relevante Umgebungsmerkmale in einer den Projektionsbereich umfassenden Umgebung des Kraftfahrzeugs beschreiben,
- basierend auf den Betriebsdaten und/oder Messdaten ein Umgebungsmodell zumindest für den Projektionsbereich bereitgestellt wird, und
- das Polygonnetz vor der Ausgabe des Lichtmusters auf Grundlage einer rechnerisch ermittelten Anpassungsinformation, die eine virtuelle physikalische Interaktion der Polygonflächen mit dem Umgebungsmodell aufgrund der wenigstens einen zugeordneten physikalischen Eigenschaft beschreibt, angepasst wird.

Dabei kann ein Polygonmerkmal zum einen die ganze Polygonfläche sein, oder aber wenigstens eine Kante und/oder wenigstens ein Eckpunkt. Erfindungsgemäß wird ausgegangen von einer Scheinwerfervorrichtung, die eine Projektionseinrichtung und eine Steuereinheit umfasst. Die Steuereinheit kann die Projektionseinrichtung zur Projektion eines vorgegebenen Lichtmusters in einem vorbestimmten Projektionsbereich der Projektionseinrichtung ansteuern. Hierbei ist ein Polygonbetriebsmodus denkbar, in dem das Lichtmuster ein Polygonnetz mit durch Projektionspunkte als Eckpunkte definierten, Polygonkanten aufweisenden Polygonflächen umfasst. Die Polygonflächen können unterschiedlich stark ausgeleuchtet werden, so dass für einen Betrachter die Polygonflächen voneinander unterscheidbar sind und ein besonderer, neuartiger, interessanter und auch, wie noch dargelegt werden wird, nützlicher Lichteindruck entsteht. Hierbei können verschiedene Arten von Projektionseinrichtungen, wie sie im Stand der Technik grundsätzlich bekannt sind, eingesetzt werden. Insbesondere kann die Projektionseinrichtung eine LED-Matrix, insbesondere Mikro-LEDs, und/oder eine Optikeinheit, beispielsweise eine Mikrospiegelanordnung, umfassen. Verschiedenste Technologien, beispielsweise DMD-Technologien, DLP-Technologien, PLM-Technologien und/oder Laserscanner-Technologien können eingesetzt werden.

Beispielsweise kann eine Scheinwerfervorrichtung verwendet werden, wie sie auch in DE 10 2021 118 839 B3 bereits beschrieben worden ist. Dabei kann mit besonderem Vorteil vorgesehen sein, dass eine Verzerrungskorrektur hinsichtlich des Höhenverlaufs auch im Rahmen der vorliegenden Erfindung stattfindet. Mit anderen Worten kann in der Steuereinheit, auch allgemein, eine Punktekarte der Projektionspunkte, die auch als Eckpunkte dienen können, gespeichert sein, so dass dem Projektionsbereich Projektionspunkte zugewiesen sind, welche sich an jeweiligen Projektionspunktekoordinaten innerhalb des Projektionsbereichs befinden. Mittels einer Sensoreinrichtung des Kraftfahrzeugs kann ein Höhenverlauf einer Oberfläche, auf die das Lichtmuster projiziert werden soll, in dem Projektionsbereich erfasst werden. Die Steuereinheit kann dazu eingerichtet sein, eine Lage der Projektionspunktekoordinaten nach einem vorbestimmten Vorverzerrungsverfahren in Abhängigkeit von dem erfassen Höhenverlauf der Oberfläche anzupassen.

Erfindungsgemäß wird nun vorgeschlagen, eine lebendige, dynamische Darstellung des Lichtmusters dadurch zu erreichen, dass eine dynamische Anpassung auf kurzen Zeitskalen erfolgt, die idealerweise dem Ansteuertakt der Projektionseinrichtung entsprechen. Anders gesagt bedeutet dies, dass eine Anpassung des Lichtmusters vorzugsweise, insbesondere ausgehend von dem Lichtmuster eines vorangehenden Zeitschritts, für jeden Zeitschritt, in dem die Ausgabe mittels der Projektionseinrichtung getaktet ist, erfolgt. Das bedeutet, es kann ein sich ständig veränderndes, lebendiges und dynamisches Polygonnetz in dem Lichtmuster geschaffen werden. Es wird eine prozedural generierte, zur Laufzeit erstellte, dynamische Darstellung verwendet, deren Anpassung in jedem Zeitschritt erfolgt, mithin keinem vorgegebenen Video entspricht. Allgemein gesprochen erfolgt dabei die Anpassung ebenso in der bereits genannten Steuereinheit.

Grundlage der Anpassung ist dabei der Gedanke, dass Polygonmerkmale der Polygonflächen mit Umgebungsmerkmalen, die in einem Umgebungsmodell beschrieben werden, virtuell physikalisch interagieren. Dafür wird konkret wenigstens einem Polygonmerkmal der Polygonflächen, beispielsweise wenigstens einem Eckpunkt und/oder wenigstens einer Kante und/oder der Polygonfläche als Ganzes, wenigstens eine physikalische Eigenschaft zugeordnet. Liegt nun eine Beschreibung von Umgebungsmerkmalen in einer den Projektionsbereich umfassenden Umgebung des Kraftfahrzeugs vor, kann eine virtuelle physikalische Interaktion der Polygonflächen, genauer deren mit physikalischen Eigenschaften versehenen Merkmalen, mit dem Umgebungsmodell errechnet werden, beispielsweise nach Art einer Simulation und/oder gemäß einer Physik-Engine, wie sie beispielsweise aus Computerspielen bekannt ist. Auf diese Weise wird erreicht, dass nicht nur ein einzigartiges Aussehen und ein einzigartiges Verhalten des Polygonnetzes generiert wird, sondern auch eine organische Darstellung für einen Betrachter erzielt wird. Das Polygonnetz reagiert sozusagen auf Umstände und Objekte in der Umgebung. Dabei ist der Begriff des Umgebungsmerkmals breit zu verstehen und kann sich beispielsweise auf Umgebungsobjekte, aber auch auf Umgebungsbedingungen, wie beispielsweise Temperatur, Windgeschwindigkeiten und dergleichen, beziehen. Nachdem die Polygonflächen insbesondere als sozusagen mit dem Kraftfahrzeug bewegt verstanden werden, nachdem ja auch die Projektionseinrichtung mit dem Kraftfahrzeug bewegt wird, können Umgebungsmerkmale, konkret Umgebungsbedingungen, auch durch das Kraftfahrzeug selbst herbeigeführt werden, beispielsweise ein bestimmter Fahrtwind beziehungsweise auftretende Kräfte beim Durchfahren einer Kurve. Mithin wird vorgeschlagen, bei entsprechenden Ausgestaltungen auch zeitaktuelle Betriebsdaten des Kraftfahrzeugs, beispielsweise eine Geschwindigkeit und/oder eine aktuelle Trajektorie des Kraftfahrzeugs und/oder Winkelgeschwindigkeiten und/oder Winkelbeschleunigungen des Kraftfahrzeugs und/oder Beschleunigungen des Kraftfahrzeugs, heranzuziehen. Auf außerhalb des Kraftfahrzeugs liegende Umgebungsmerkmale bezogene Informationen können aus Messdaten, die beispielsweise mit Sensoreinrichtungen des Kraftfahrzeugs aufgenommen wurden, hergeleitet werden; dabei sei jedoch darauf hingewiesen, dass die Messdaten nicht zwangsläufig ursprünglich vom Kraftfahrzeug selbst stammen müssen, sondern auch über eine Kommunikationseinrichtung des Kraftfahrzeugs empfangen werden können und dort verfügbar sein können. Dies betrifft beispielsweise Informationen zu Wetterbedingungen und dergleichen, die beispielsweise aus dem Internet und/oder von einem sonstigen Backend-Server abgerufen werden können. Ersichtlich können eine Vielzahl von Informationsquellen eingesetzt werden, um die für die virtuelle physikalische Interaktion und die wenigstens eine physikalische Eigenschaft relevanten Umgebungsmerkmale zu ermitteln und im Umgebungsmodell zu beschreiben.

In konkreten Ausgestaltungen kann beispielsweise vorgesehen sein, dass die virtuelle Interaktion durch wenigstens einen mathematischen Zusammenhang beschrieben wird, in dem die Betriebsdaten und/oder die Messdaten und/oder daraus abgeleitete Modellparameter des Umgebungsmodells eingehen. Gehen die Betriebsdaten und/oder die Messdaten unmittelbar in den mathematischen Zusammenhang ein, bilden die Betriebsdaten und/oder die Messdaten Modellparameter des Umgebungsmodells; selbstverständlich ist es jedoch auch möglich, aus den Betriebsdaten und/oder den Messdaten die konkreten Modellparameter des Umgebungsmodells, welches ferner den mathematischen Zusammenhang umfasst, wenigstens teilweise zu ermitteln. Hierbei kann der mathematische Zusammenhang beispielsweise wenigstens einen grundlegenden physikalischen Zusammenhang, beispielsweise ein physikalisches Interaktionsgesetz zur Beschreibung der virtuellen physikalischen Interaktion, umfassen. Beispielsweise kann der mathematische Zusammenhang, worauf im Folgenden noch genauer eingegangen werden wird, eine Wechselwirkungskraft beschreiben, die auf das entsprechende Polygonmerkmal ausgewirkt wird, und dergleichen. Es sind jedoch auch komplexere virtuelle physikalische Interaktionen denkbar, beispielsweise eine Ausbildung von Polygonflächen beziehungsweise Polygonmerkmalen als Sensoren für ortsbezogene Merkmale und eine entsprechende Reaktion hierauf.

Je nach gewünschter virtueller physikalischer Interaktion, für die im Folgenden noch Beispiele genauer dargelegt werden, können entsprechende physikalische Eigenschaften gewählt werden, wobei selbstverständlich unterschiedlichen Polygonmerkmalen auch unterschiedliche physikalische Eigenschaften zugeordnet sein können. Die wenigstens eine der wenigstens einen zugeordneten physikalischen Eigenschaft kann beispielsweise gewählt sein aus der Gruppe umfassend eine Masse, eine Geschwindigkeit, ein Reibungswert, ein Elastizitätswert, eine Festigkeit und wenigstens eine elektromagnetische Eigenschaft. Zusätzlich oder alternativ können physikalische Eigenschaften auch für wenigstens einen Teil der Polygonmerkmale vorgegebene Randbedingungen beschreiben, beispielsweise eine Unbeweglichkeit eines Polygonmerkmals und dergleichen.

Zur Ermittlung der Anpassungsinformation kann, wie bereits dargestellt wurde, vorzugsweise wenigstens eine Simulation, insbesondere durch eine Physik-Engine, durchgeführt werden. Alternativ oder zusätzlich kann wenigstens ein Lösungsalgorithmus für ein Anfangswertproblem eingesetzt werden. Simulationen zur Abbildung von virtuellen physikalischen Interaktionen sind im Stand der Technik grundsätzlich bereits bekannt. Beispielsweise kann als Simulation eine Finite-Elemente-Simulation und/oder eine Partikelsimulation verwendet werden. Als Lösungsalgorithmus kann beispielsweise ein explizites Euler-Verfahren eingesetzt werden, um ein Anfangswertproblem zu lösen.

In anderen Worten kann für die Umsetzung virtueller physikalischer Interaktion mit Umgebungsmerkmalen vorgesehen sein, dass Polygonmerkmalen der Polygonflächen, beispielsweise den Eckpunkten und/oder den Polygonflächen insgesamt, physikalische Eigenschaften zugewiesen werden. Diese Eigenschaften können beispielsweise Masse und/oder Gewicht und/oder Reibung und/oder Geschwindigkeit und/oder Festigkeit und/oder elektromagnetische Eigenschaften sein. Das Umgebungsmodell kann Effekte wie Gravitation, Federung, elektromagnetische Wechselwirkungen und dergleichen abbilden, so dass sich realistische, physikalische Bewegungen und Verhaltensweisen nachbilden lassen, wie beispielsweise von Physik-Engines aus Spielen oder Simulationen bekannt ist. Besonders bevorzugt kann sich unter Berücksichtigung der Umgebungsmerkmale sowie der mit wenigstens einer physikalischen Eigenschaft versehenen Polygonmerkmale ein Partikelsystem ergeben, in dem die virtuelle physikalische Interaktion mittels einer Partikelsimulation errechnet werden kann; auch Verfahren zur Lösung von Anfangswertproblemen, wie beispielsweise das explizite Euler-Verfahren, können eingesetzt werden.

Dabei sei an dieser Stelle noch allgemein darauf hingewiesen, dass das Lichtmuster der Projektionseinrichtung alleinig genutzt wird, jedoch ist es auch denkbar, dass das Polygonnetz weitere Lichteffekte, beispielsweise eine flächige Beleuchtung, überlagert. Ferner sei darauf hingewiesen, dass das im Rahmen des erfindungsgemäßen Verfahrens erzeugte organische, lebendige und dynamische Verhalten des Polygonnetzes konkret durch Anpassungsparameter beschrieben sein kann, die auch durch einen Benutzer wählbar sein können. Beispielsweise ist es denkbar, mittels einer Mensch-Maschine-Schnittstelle verschiedene Anpassungsparameter der dynamischen Anpassung durch einen Benutzer, beispielsweise einen Fahrer des Kraftfahrzeugs, einzustellen. Beispielsweise können bestimmte, gewollte virtuelle physikalische Interaktionen ausgewählt werden, deren Stärke parametriert werden und dergleichen.

Allgemein kann gesagt werden, dass die dynamische Anpassung des Polygonnetzes bevorzugt eine weiche Bewegung ohne Sprünge oder Ähnliches beschreibt, beispielsweise eine kontinuierliche Veränderung, um angenehm im Anblick und mit wenig Ablenkungspotential ausgestaltet zu sein.

Im Folgenden werden nun konkrete, vorteilhafte Ausgestaltungen der erfindungsgemäß vorgesehenen, dynamischen Anpassung des Polygonnetzes zur Laufzeit vorgeschlagen.

Eine besonders zweckmäßige Weiterbildung der vorliegenden Erfindung sieht vor, dass die virtuelle physikalische Interaktion ein durch die, insbesondere mit einer Sensoreinrichtung des Kraftfahrzeugs aufgenommenen, Messdaten beschriebenes Objekt, insbesondere einen Fußgänger, in der Umgebung betrifft. In diesem Fall ist wenigstens eines des wenigstens einen Umgebungsmerkmals also ein Objekt. Ist nun die Projektionseinrichtung, wovon im Folgenden ausgegangen werden soll, auch zur kontaktanalogen Darstellung bezüglich solcher Objekte ausgebildet, lassen sich virtuelle physikalische Interaktionen mit derartigen Objekten besonders gut darstellen. Dabei kann es sich bei dem Objekt insbesondere um einen Fußgänger handeln, auf den mithin durch die virtuelle physikalische Interaktion und die daraus folgende dynamische Anpassung der Darstellung hingewiesen werden kann, was die Sicherheit erhöht. Zum anderen bemerkt auch der Fußgänger, dass er von der Sensorik des Kraftfahrzeugs erfasst wurde, nachdem das Polygonnetz ersichtlich auf ihn reagiert.

In einer konkreten, vorteilhaften Ausgestaltung kann dabei vorgesehen sein, dass die virtuelle physikalische Interaktion eine Anziehungskraft und/oder Abstoßungskraft zwischen dem Objekt und wenigstens einem der Polygonmerkmale, dem eine physikalische Eigenschaft zugeordnet ist, umfasst. Auf diese Weise kann das Objekt beispielsweise sozusagen angeschwärmt werden, indem Polygonmerkmale, insbesondere Eckpunkte, von dem Objekt, beispielsweise einem Fußgänger, sozusagen "magnetisch" angezogen werden. Alternativ (oder für manche Eckpunkte zusätzlich) ist es auch denkbar, dass Eckpunkte beziehungsweise Polygone von dem Objekt "magnetisch" abgestoßen werden. Dabei kann sich die Bewegungsgeschwindigkeit von Eckpunkten beispielsweise erhöhen, je näher sich diese an dem Objekt, beispielsweise einem Fußgänger, befinden. Möglich ist es ferner auch, dass Polygonmerkmale, beispielsweise Eckpunkte und/oder Kanten, die das Objekt kontaktieren, an diesem sozusagen "kleben" bleiben. Sie werden mithin bei einer weiteren Bewegung des Objekts mitgenommen.

Gerade im Hinblick auf eine virtuelle Anziehungskraft zwischen dem Polygonmerkmal und dem Objekt kann es ferner auch zweckmäßig sein, wenigstens einen Interaktionsparameter der virtuellen physikalischen Interaktion, mithin einem Anpassungsparameter, zur Herbeiführung einer Umkreisungsbewegung zu wählen. Eine derartige Umkreisungsbewegung kann auch Annäherungsbewegungen überlagern, so dass beispielsweise eine Art "Absturzspirale" entstehen kann.

Selbstverständlich sind auch weitere, vorteilhaft einsetzbare konkrete Ausgestaltungen der Anziehungskraft und/oder Abstoßungskraft als virtuelle physikalische Interaktion denkbar. So kann beispielsweise auch ein vom Abstand abhängiger Anziehungskraft- und/oder Abstoßungskraftverlauf vorgesehen werden, so dass beispielsweise eine Art "Bouncen" der Polygonmerkmale gegen das Objekt, beispielsweise einen Fußgänger, erfolgen kann, wenn auf größere Abstände eine Anziehungskraft entsteht, welche auf kurze Abstände in eine gegebenenfalls stärkere Abstoßungskraft übergeht. Auch ist es denkbar, für unterschiedliche Polygonmerkmale einer einzelnen Polygonfläche unterschiedliche Wechselwirkungsarten vorzusehen, beispielsweise manche Eckpunkte und/oder Kanten anzuziehen und andere abzustoßen oder positionsfest zu halten, was zu einem Verzerrungseffekt führen kann. In weiteren denkbaren konkreten Ausgestaltungen ist es denkbar, dass Polygonflächen von dem Objekt angezogen werden und in diesem verschwinden, wobei beispielsweise vom Rand des Lichtmusters neue Polygone in das Netz hinzukommen können. Auch der umgekehrte Fall ist möglich, beispielsweise das Entstehen neuer, abzustoßender Polygonflächen aus beziehungsweise an dem Objekt.

Möglich ist es in zweckmäßiger Weiterbildung ferner, dass die virtuelle physikalische Interaktion einen virtuellen Energieeintrag und/oder Energieentzug beschreibt, der durch Erhellung beziehungsweise Verdunklung der Projektionshelligkeit der Polygonflächen und/oder eine Erhöhung oder Verlangsamung der Bewegungsgeschwindigkeit des wenigstens einen Polygonmerkmals, insbesondere eines Eckpunkts, dargestellt wird. Möglich ist es beispielsweise, die Helligkeit der Polygonflächen um ein Objekt, beispielsweise einen Fußgänger, anzupassen, beispielsweise die Helligkeit zu erhöhen, um das Objekt hervorzuheben. Beispielsweise kann eine hervorragende Hervorhebung eines Objekts, beispielsweise eines Fußgängers, in der dynamischen Anpassung des Polygonnetzes dadurch erfolgen, dass die Polygonflächen um das Objekt heller ausgeleuchtet werden als weiter entfernte Polygonflächen und/oder die Bewegungsgeschwindigkeit der Eckpunkte der Polygonflächen schneller ist, je näher sich der Eckpunkt an dem Objekt befindet. Wie bereits erwähnt wurde, können die entsprechenden Anpassungsparameter, hier Interaktionsparameter, parametrierbar sein, beispielsweise die Stärke eines Energieentzugs beziehungsweise Energieeintrags (Helligkeitsunterschied) und/oder die Reichweite der Interaktion (Radius).

Wie bereits erwähnt, kann die virtuelle physikalische Interaktion auch ein Anhaften wenigstens eines der Eckpunkte an dem Objekt betreffen, so dass die entsprechenden Polygonmerkmale bei Bewegung des Objekts mit diesem "mitgezogen" werden.

In einer besonders vorteilhaften Weiterbildung der vorliegenden Erfindung kann vorgesehen sein, dass wenigstens einem Interaktionsereignis der virtuellen physikalischen Interaktion, insbesondere einer Berührung zwischen wenigstens einem der Polygonmerkmale mit dem Objekt, eine akustische Ausgabeinformation zugeordnet ist, die bei Auftreten des Interaktionsereignisses mittels eines nach außerhalb des Kraftfahrzeugs wirkenden akustischen Ausgabemittels und/oder mittels eines auf einen Innenraum des Kraftfahrzeugs wirkende akustischen Ausgabemittels ausgegeben wird. Denkbar ist also bei einer Interaktion mit einem Objekt eine Kombination mit einem Außensound des Kraftfahrzeugs, wobei beispielsweise wenigstens ein Ton bei Berührung und/oder Beeinflussung eines Polygonmerkmals ausgegeben werden kann. In diesem Zusammenhang ist es besonders vorteilhaft, wenn das nach außerhalb des Kraftfahrzeugs wirkende Ausgabemittel zur Ausgabe der Ausgabeinformation derart ausgebildet ist, dass diese vom Ort des Interaktionsereignisses und/oder des Objekts auszugehen scheint. Mithin kann eine 3D-Soundfunktion genutzt werden, um die akustische Ausgabe am Ort des Objekts erscheinen zu lassen. Darüber hinaus sind selbstverständlich auch Stereo-Ausgabemittel und dergleichen denkbar. Denkbar ist es zusätzlich oder alternativ weiterhin, eine Kombination des Innensounds des Kraftfahrzeugs herbeizuführen, um beispielsweise auch akustisch eine Richtung zu dem Objekt, beispielsweise einem Fußgänger, anzugeben. Mittels eines auf den Innenraum des Kraftfahrzeugs wirkenden Ausgabemittels kann also mit besonderem Vorteil eine richtungsabhängige Akustikrückmeldung bezüglich des Objekts bereitgestellt werden.

In einer besonders vorteilhaften Ausgestaltung der vorliegenden Erfindung kann vorgesehen sein, dass wenigstens eines des wenigstens einen Umgebungsmerkmals einen Umgebungszustand, insbesondere eine Wetterbedingung, beschreibt. Wetterbedingungen können beispielsweise Wind, gegebenenfalls auch von der Bewegung des Kraftfahrzeugs selbst ausgelösten Wind (sogenannten Fahrtwind), Niederschlag, Temperatur, Nebel und dergleichen betreffen. Hierbei können Messdaten von Sensoreinrichtungen des Kraftfahrzeugs verwendet werden, jedoch selbstverständlich auch Messdaten, die von Kommunikationseinrichtungen des Kraftfahrzeus geliefert werden, beispielsweise durch Abruf aus dem Internet, etwa von einem Wetterdienst. Durch das Kraftfahrzeug selbst hervorgerufene Umgebungszustände können wenigstens teilweise aus den Betriebsdaten hergeleitet werden.

Konkret kann beispielsweise vorgesehen sein, dass der Umgebungszustand eine Windgeschwindigkeit und/oder Windrichtung bezüglich eines durch das lokale Wetter und/oder die Bewegung des Kraftfahrzeugs entstehenden Windes betrifft, wobei die virtuelle physikalische Interaktion ein Angreifen des Windes an den Polygonmerkmalen umfasst. Damit resultiert die physikalische Interaktion insbesondere in einer Bewegung der Polygonflächen durch die Anpassung. Hierbei kann das Polygonmerkmal die gesamte Polygonfläche sein, um beispielsweise eine Art Segeleffekt abzubilden, möglich ist es aber auch, dass das Polygonmerkmal wenigstens ein Eckpunkt ist. Dann kann beispielsweise der Wind dynamisch Eckpunkte mit sich zerren und so die Windrichtung außerhalb des Kraftfahrzeugs verdeutlichen. Möglich ist es beispielsweise, einen Teil der Eckpunkte von Polygonflächen festzuhalten, während an dem wenigstens einen verbleibenden Eckpunkt der Wind zerrt und in einer Bewegung resultiert, die beisp9elsweise ein Flattern im Wind abbilden kann. In anderen Ausgestaltungen ist es auch denkbar, dass Polygone faktisch durch den Projektionsbereich hindurchfliegen.

Eine weitere konkrete Ausgestaltung der vorliegenden Erfindung kann vorsehen, dass der Umgebungszustand Niederschlag betrifft, wobei Auftrefforte des Niederschlags in dem Projektionsbereich aus den Messdaten ermittelt werden und bei Auftreffen von Niederschlag in einer Polygonfläche diese für einen vorbestimmten Zeitraum in ihrer Projektionshelligkeit angepasst wird. Die virtuelle physikalische Interaktion bildet dann eine Detektion des Auftreffens ab, wobei die Detektion des Auftreffens beispielsweise durch ein Aufleuchten und/oder ein Abdunkeln der Polygonfläche dargestellt werden kann. Auf diese Weise kann Niederschlag visualisiert werden, wobei beispielsweise bei Regen Polygonflächen, auf die ein Tropfen auftrifft, leicht aufleuchten können.

In diesem Zusammenhang kann eine zweckmäßige Weiterbildung vorsehen, dass bei der Nutzung von Wind und/oder Niederschlag als Umgebungszustand zusätzlich Innenraum-Ausgabemittel innerhalb des Kraftfahrzeugs angesteuert werden, um die entsprechenden Umgebungsmerkmale akustisch und/oder optisch und/oder haptisch wiederzugeben. Auf diese Weise kann beispielsweise die Außenwelt auch in dem Innenraum gespiegelt werden, um die Insassen im geheizten, trockenen, gemütlichen Innenraum an das weniger komfortable Wetter außerhalb des Kraftfahrzeugs zu erinnern. Auf diese Weise kann ein immersives Erlebnis geschaffen werden.

Gerade im Hinblick auf Niederschlag betreffende Umgebungszustände kann auch vorgesehen sein, dass immer dann, wenn virtuell ein Tropfen, eine Flocke oder dergleichen detektiert wird, dieses Interaktionsereignis der virtuellen physikalischen Interaktion mittels eines oder des nach außerhalb des Kraftfahrzeugs wirkenden akustischen Ausgabemittels und/oder mittels eines oder des auf einen Innenraum des Kraftfahrzeugs wirkenden akustischen Ausgabemittels durch eine akustische Ausgabeinformation, beispielsweise einen Ton, begleitet wird. Auf diese Weise wird beispielsweise Niederschlag auch hörbar gemacht, insbesondere innerhalb des Kraftfahrzeugs, um das bereits beschriebene immersive Erlebnis zu verbessern.

In einer weiteren konkreten Ausgestaltung kann wenigstens eines des wenigstens einen Umgebungsmerkmals eine Boden- und/oder Lufttemperatur sein, wobei, insbesondere ab Überschreiten eines Grenzwerts für die Boden- und/oder Lufttemperatur, wenigstens einen Teil der Polygonflächen durch zyklische Helligkeitsvariation über mehrere Zeitschritte in Abhängigkeit der Boden- und/oder Lufttemperatur flimmernd dargestellt werden. In diesem Fall ist die virtuelle physikalische Interaktion ein Hitzeflimmern, das das Flimmern heißer Luft abbildet. Beispielsweise können die Polygonflächen auf heißem Asphalt/Untergrund flimmern. Auch auf diese Weise ist eine Art Sichtbarmachung der Außenwelt im Innenraum möglich, um beispielsweise den Insassen im klimatisierten, gemütlichen Innenraum an die Hitze außerhalb zu erinnern. Es ist ein immersives Erlebnis gegeben.

In einer besonders vorteilhaften Weiterbildung der vorliegenden Erfindung kann vorgesehen sein, dass die Anpassungsinformation unter zusätzlicher Berücksichtigung wenigstens einer Zusatzinformation einer Fahrzeugfunktion ermittelt wird. Auf diese Weise ist es durch die dynamische Anpassung auch möglich, Zusatzinformationen von Fahrzeugsystemen mittels des Polygonnetzes wiederzugeben, so dass ein weiterer, besonders vorteilhafter Nutzen der Scheinwerfervorrichtung gegeben ist. Dabei sei an dieser Stelle noch angemerkt, dass die Ausgestaltung, eine dynamische, insbesondere per Zeitschritt erfolgende, Anpassung auf Basis einer von einer Fahrzeugfunktion bereitgestellten Zusatzfunktion durchzuführen, auch alleinstehend, das bedeutet unabhängig von der Anpassung auf Grundlage einer virtuellen physikalischen Interaktion, zweckmäßig sein kann. In diesem Fall wird also das Polygonnetz nicht zusätzlich zu, sondern ohne virtuelle physikalische Interaktion, vor der Ausgabe des Lichtmusters auf Grundlage der Zusatzinformation angepasst.

In einer konkreten Ausgestaltung kann dabei vorgesehen sein, dass die Zusatzinformation eine Spurverlassenswarnung eines Fahrerassistenzsystems mit zugeordneter Verlassensseite ist, wobei die Polygonflächen auf der Verlassensseite zur Ausgabe der Spurverlassenswarnung über mehrere Zeitschritte durch zyklische Helligkeitsvariation blinkend dargestellt werden. Mithin kann eine Spurverlassenswarnung in den erfindungsgemäß beschriebenen Lichtteppich mit Polygon-Textur, also das Polygonnetz, integriert werden, indem beim Verlassen der aktuellen Fahrspur die Polygonflächen auf der entsprechenden Seite modifiziert werden, beispielsweise heller werden oder sogar, um einen nochmals verbesserten Hinweis zu geben, blinken. Ähnliche Möglichkeiten zur Ausgabe von insbesondere richtungs- und/oder positionsbezogenen Warnungen von Fahrzeugsystemen können auf analoge Art und Weise lokalisiert, insbesondere kontaktanalog, mittels einer Anpassung des Polygonnetzes ausgegeben werden.

In einer besonders bevorzugten Weiterbildung der vorliegenden Erfindung kann vorgesehen sein, dass die Zusatzinformation einen durch eine, insbesondere wenigstens teilweise das Lichtmuster vorgebende, Fahrzeugfunktion gewünschten Übergang von einem aktuellen Ausleuchtbereich des Lichtmusters in dem Projektionsbereich zu einem neuen Ausleuchtbereich des Lichtmusters in dem Projektionsbereich beschreibt, wobei der Übergang über mehrere Zeitschritte durch eine Bewegung und/oder ein Hinzufügen und/oder ein Entfernen von Polygonflächen zur Bildung des neuen Ausleuchtbereichs erfolgt, welche durch eine Abfolge von Anpassungsinformationen beschrieben wird. Diese Funktion kann als ein "Morphing" bezeichnet werden, also einen Übergang zwischen Bildern, hier Lichtmustern, bei dem sich die Form flüssig an die Zieldarstellung, hier den Zielausleuchtbereich, anpasst. Konkret kann der Übergang einen Wechsel von einer Lichtfunktion zu einer anderen Lichtfunktion beschreiben. Das Lichtmuster, konkret das Polygonnetz, kann dann faktisch zwischen Lichtfunktionen hin- und hermorphen. Auf diese Weise entsteht eine besonders einprägsame, den Wechsel auf elegante und gefällige Art illustrierende Gesamtdarstellung.

Hierbei kann insbesondere auch vorgesehen sein, dass bei einem Wechsel von einer Lichtfunktion zu einer anderen Lichtfunktion die eine und/oder die andere Lichtfunktion ohne Verwendung des Polygonbetriebsmodus durchgeführt wird, wobei der Polygonbetriebsmodus zu Beginn des Übergangs aktiviert beziehungsweise am Ende des Übergangs deaktiviert wird. Wird beispielsweise die Scheinwerfervorrichtung, insbesondere die Projektionseinrichtung, zunächst nur genutzt, um einen durchgängigen Lichtteppich in dem jeweiligen Ausleuchtbereich der Lichtfunktion darzustellen, kann beim Wechsel der Lichtfunktion sich zunächst der Lichtteppich in das Polygonnetz mit den Polygonflächen wandeln, wonach dann der durch die Anpassungsinformation beschriebene, flüssige und dynamische Übergang zu der anderen Lichtfunktion erfolgt, für welche dann der Polygonbetriebsmodus wieder deaktiviert werden kann und ein Lichtteppich entstehen kann. Somit wird das Polygonnetz in dieser Ausgestaltung für die Anzeige des Übergangs verwendet. Hierbei wird bei Aktivierung zu Beginn des Übergangs die Definition einer Startkonfiguration des Polygonnetzes durch die Grenzen des aktuellen Ausleuchtbereichs beschränkt.

Die Abfolge gemäß der Abfolgeinformation kann, allgemein gesagt, durch einen geeigneten Ermittlungsalgorithmus ermittelt werden, der die Ausleuchtbereiche als Eingangsdaten nutzt. Hierbei kann konkret beispielsweise vorgesehen sein, dass bei einer Vergrößerung des Ausleuchtbereichs durch den Übergang neue Polygonflächen als heranfliegend und den aktuellen Ausleuchtbereich zum neuen Ausleuchtbereich ergänzend dargestellt werden. Dies kann beispielsweise bei einer Zuschaltung eines Kurvenlichts, eines Spurwechsellichts und/oder eines Navigationslichts besonders zweckmäßig sein.

Bei einer wenigstens teilweisen Aufteilung des Ausleuchtbereichs kann vorgesehen sein, dass zur Bildung des neuen Ausleuchtbereichs von einer gemeinsamen Kante in einem Aufteilbereich ausgehend sich auseinander bewegende Polygonflächen dargestellt werden, die sich zu den nach der Aufteilung zu den gewünschten Anteilen des Ausleuchtbereichs zusammensetzen. Hierbei kann der Übergang beispielsweise einen Wechsel von einem Spurlicht zu einem Baustellenlicht betreffen. Ein Baustellenlicht kann beispielsweise zwei Linien vor das Kraftfahrzeug projizieren, die die Breite des Kraftfahrzeugs auf der Fahrbahn anzeigen und somit helfen, sicher durch Engstellen, beispielsweise in Baustellen, zu manövrieren.

Soll in einem konkreten Beispiel ein Übergang von einem Spurlicht mit Polygonnetz zu einem Baustellenlicht erfolgen, kann sich der Lichtteppich in der Mitte auftrennen und die Einzelflächen können zu dem Baustellenlicht morphen. In einem anderen konkreten Beispiel kann dann, wenn ein Spurlicht ohne Polygonnetz zu Baustellenlicht mutieren soll, zunächst der Lichtteppich eine Polygon-Textur erhalten, das bedeutet, durch ein Polygonnetz beschrieben werden. Der Lichtteppich, also das Polygonnetz, kann sich dann in einzelne Polygone aufteilen, die zur Position des Baustellenlichts wandern. Die Polygone verbinden sich dann zu dem Baustellenlicht mit der Polygon-Textur, wobei das Polygonnetz dann wieder verschwinden kann.

In einer vorteilhaften Weiterbildung der vorliegenden Erfindung kann vorgesehen sein, dass die Fahrzeugfunktion eine Fahrfunktion zur vollständig automatischen Führung des Kraftfahrzeugs ist. Das bedeutet, das Polygonnetz und dessen kontinuierliche Anpassung kann auch genutzt werden, um eine Rückmeldung hinsichtlich des automatisierten Fahrens an Insassen des Kraftfahrzeugs und/oder weitere Verkehrsteilnehmer zu geben. Hierzu können beispielsweise bestimmte Anordnungsmuster und/oder Bewegungsweisen und/oder durch das Polygonnetz gebildete Symbole zur Anzeige verschiedener Zustände beziehungsweise Betriebsinformationen der Fahrfunktion zur vollständig automatischen Führung des Kraftfahrzeugs als Zusatzinformation genutzt werden. Dabei kann die Zusatzinformation beispielsweise ein aktuell geplantes Fahrmanöver und/oder aktuell erkannte Objekte in der Umgebung betreffen, die durch Anpassung des Lichtmusters angezeigt werden. Beispielsweise kann eine zukünftig geplante Trajektorie des Kraftfahrzeugs durch Abdunklung und/oder Erhellung der Polygonflächen entlang dieser Trajektorie abgebildet werden. Möglich ist es auch, aktuell erkannte Objekte in der Umgebung anzuzeigen, wobei diesbezüglich auch die obigen Ausführungen hinsichtlich virtueller physikalischer Interaktion mit Objekten als Umgebungsmerkmalen eingesetzt werden können, beispielsweise ein Anschwärmen von detektierten Objekten, beispielsweise anderen Verkehrsteilnehmern, durch die Polygone und dergleichen. Es sind jedoch auch andere, beispielsweise statische Hinweise auf detektierte Objekte möglich, beispielsweise aus Polygonflächen gebildete Pfeile, die auf die Objekte weisen und dergleichen.

Im Kontext einer Fahrfunktion zur vollständig automatischen Führung des Kraftfahrzeugs kann die Zusatzinformation ferner einen aktuellen Betriebszustand eines die Fahrfunktion ausführenden Fahrzeugsystems betreffen, welche durch eine zusätzliche Anpassung und/oder einer Modifikation der Ermittlung der Anpassungsinformation dargestellt wird. Beispielsweise kann die Übernahme der Führungsverantwortung durch ein Fahrzeugsystem zur vollständig automatischen Führung des Kraftfahrzeugs angezeigt werden, indem beispielsweise sich das Verhalten der Polygonflächen verändert. Insbesondere ist es in diesem Zusammenhang auch möglich, Interaktionsparameter der virtuellen physikalischen Interaktion anzupassen, beispielsweise im Hinblick auf eine schnellere Bewegung, schnelleres Leuchten und dergleichen, je nach Betriebszustand des die Fahrfunktion ausführenden Fahrzeugsystems.

In Weiterbildung des erfindungsgemäßen Verfahrens kann auch vorgesehen sein, dass die Zusatzinformation einen eingestellten Fahrmodus des Kraftfahrzeugs betrifft, welcher durch eine zusätzliche Anpassung und/oder eine Modifikation der Ermittlung der Anpassungsinformation dargestellt wird. Beispielsweise ist es bei Kraftfahrzeugen bekannt, unterschiedliche, auf den Fahrertyp abgestellte Fahrmodi anzubieten, in denen das Kraftfahrzeug unterschiedlich reagiert, beispielsweise in einem sportlichen Fahrmodus schneller beschleunigt und den physikalischen Grenzbereich des Kraftfahrzeugs mehr ausnutzt. Konkret kann beispielsweise vorgesehen sein, dass bei einem sportlichen Fahrmodus im Vergleich zu einem komfortableren Fahrmodus die Dynamik der Anpassung erhöht wird, insbesondere durch eine höhere Geschwindigkeit und/oder höhere Bewegungsstrecken und/oder höhere Beschleunigungen der Bewegung von Polygonmerkmalen, insbesondere Polygonflächen. Der Fahrmodus kann dabei durch einen Fahrer wählbar sein, beispielsweise als "drive select".

Möglich ist es im Rahmen der vorliegenden Erfindung ferner, dass die Zusatzinformation eine akustische Ausgabe innerhalb des Kraftfahrzeugs und/oder eine Stimmung eines Insassen beschreibt. So ist es beispielsweise denkbar, die dynamische, lebendige und insbesondere auch organische Wiedergabe des Polygonnetzes an Musik und/oder Sprachassistenzen im Kraftfahrzeug anzupassen und/oder als Audiovisualizer zu verwenden. Beispielsweise kann die durch die Anpassung auftretende Bewegung der Polygonflächen auch auf Stimmungen des Fahrers, die durch entsprechende Detektionsmittel erkannt werden können, abgestimmt werden, beispielsweise durch langsamere Bewegungen bei eher ruhigen Stimmungen, schnellere, tanzende Bewegungen bei fröhlichen Stimmungen und dergleichen. Dies gilt insbesondere, wenn wie unten noch genauer erläutert werden wird, eine Grundbewegung verwendet wird, die beispielsweise der physikalischen Interaktion unterlegt genutzt werden kann, um das Vorliegen einer bestimmten Dynamik sicherzustellen.

In Ausgestaltungen der Erfindung kann auch allgemein vorgesehen sein, dass durch eine Lichtfunktion des Kraftfahrzeugs ein zu nutzender Ausleuchtbereich des Projektionsbereichs vorgegeben wird, der kleiner als das Polygonnetz ist, wobei ein darzustellender Anteil des Polygonnetzes durch Überlagerung mit dem zu nutzenden Ausleuchtbereich ermittelt wird und nur dieser Anteil projiziert wird. Eine konkrete, einfach umsetzbare Möglichkeit, eine derartige Texturüberlagerung von Ausleuchtbereichen zu erreichen, ist das sogenannte Alpha-Blending. Beispielsweise bietet OpenGL die Möglichkeit, Ausleuchtbereiche mit einem Polygonnetz zu überlagern, wobei die durchzuführende Operation dann einer Matrix-Multiplikation entsprechen kann.

In einer besonders bevorzugten Weiterbildung der vorliegenden Erfindung kann vorgesehen sein, dass zur initialen Ermittlung des Polygonnetzes des Lichtmusters
- durch eine Generierungsfunktion eine Eckpunkte beschreibende Punktewolke innerhalb des Projektionsbereichs generiert wird,
- durch eine Verbindungsfunktion der Eckpunkte die Polygonflächen definiert werden, und
- durch eine Zuordnungsfunktion den Polygonflächen Projektionshelligkeiten zugeordnet werden.

Dabei ist eine besonders ausgeglichene, gleichmäßige, sozusagen "weiche" Erzeugung besonders dann zweckmäßig, wenn später eine ebenso weiche, ohne zu starke Kontraste beziehungsweise Sprünge auskommende Anpassung im Rahmen der virtuellen physikalischen Interaktion und/oder einer Grunddynamik erfolgen soll.

Beispielsweise kann zur Erzeugung einer möglichst gleichverteilten Punktewolke innerhalb des Projektionsbereichs, beispielsweise auch in einem Ausleuchtbereich als Unterbereich des Projektionsbereichs, vorgesehen sein, dass der Generierungsalgorithmus eine Poisson-Disk-Abtastung, insbesondere einen Bridson-Algorithmus, umfasst. Im Vergleich zu anderen Abtastverfahren stellt die Poisson-Disk-Abtastung eine deutlich gleichförmigere Punktverteilung in der Punktewolke bereit. Hierbei bietet sich insbesondere die Verwendung eines Bridson-Algorithmus an. Alternative, im Rahmen der Erfindung einsetzbare Verfahren umfassen Mitchell's Best Candidate-Algorithmen und/oder einheitliche Zufallsstichproben. In allen diesen Fällen wird eine zufallsbasierte Erzeugung einer räumlich gleichmäßig verteilten Punktemenge, nämlich der Punktewolke, durchgeführt.

In dieser Punktewolke können als Polygonflächen beispielsweise Dreiecke definiert werden. Für Dreiecke sind bereits eine Vielzahl von Verfahren bekannt, um diese wohlgeformt ohne Überschneidung auf einer Punktewolke zu definieren. Als wohlgeformte Dreiecke können hierbei solche verstanden werden, bei denen die Minimalwinkel der Dreiecke maximiert sind. Zweckmäßigerweise kann also vorgesehen sein, dass als Polygenflächen Dreiecke überschneidungsfrei bei Maximierung der Minimalwinkel der Dreiecke definiert werden, insbesondere mittels Delaunay-Triangulierung. Alternativ kann auch ein Graham's Scan-Algorithmus eingesetzt werden, um eine konvexe Hülle zu finden, um dann mittels weiterer Unterschritte des Verbindungsalgorithmus innerhalb die Dreiecke zu definieren.

Was die Schattierung der Polygonflächen angeht, also die Wahl der Projektionshelligkeitswerte, ist es besonders vorteilhaft, wenn diese auf der Grundlage eines wenigstens zweidimensionalen, ersten Gradientenrauschens zugeordnet werden. Auf diese Weise entstehen graduelle Übergänge der Schattierung benachbarter Polygonflächen zur Vermeidung von Helligkeitssprüngen. Es wird eine ideale Ausgangsbasis für einen organischdynamischen Charakter des Polygonnetzes geschaffen. Hierbei ist die entstehende Schattierung vergleichbar mit der von Wolken, wodurch ein weiterer natürlicher, organischer Bezug für Betrachter geschaffen wird.

Hierbei wird ein wenigstens zweidimensionales erstes Gradientenrauschen erzeugt, so dass mithin auch eine wenigstens zweidimensionale Rauschdomäne (Definitionsbereich der das erste Gradientenrauschen beschreibenden Rauschfunktion im n-dimensionalen Rauschraum) existiert, die den Projektionsbereich oder zumindest Ausleuchtungsbereich, in dem das Polygonnetz erschaffen werden soll, abdeckt. Dabei kann das erste Gradientenrauschen beispielsweise nach einer Simplex-Noise-Methode erzeugt werden, wobei alternativ auch eine Perlin-Noise-Methode und/oder eine Wavelet-Noise-Methode angewendet werden können. Hierbei kann insbesondere eine Unterschiede im Rauschen zwischen benachbarten Abtastpunkten beschränkende Randbedingung verwendet werden. Durch eine derartige Randbedingung können zu starke Sprünge zusätzlich vermieden werden. Anders gesagt ist eine wichtige Zusatzeigenschaft des wenigstens zweidimensionalen ersten Gradientenrauschens, dass bei seiner Erzeugung Sprünge in der Helligkeit vermieden werden. Zur Ermittlung der Projektionshelligkeiten aus dem wenigstens zweidimensionalen ersten Gradientenrauschen, insbesondere also der wenigstens zweidimensionalen ersten Rauschdomäne, kann beispielsweise vorgesehen sein, den Rauschwert am Ort des Flächenschwerpunkts der jeweiligen Polygonfläche zu wählen; möglich sind jedoch auch andere Vorgehensweisen, beispielsweise eine Mittelung von Rauschwerten über die jeweiligen Polygonflächen und dergleichen.

In einer besonders zweckmäßigen Weiterbildung der vorliegenden Erfindung in diesem Zusammenhang kann vorgesehen sein, dass das erste Gradientenrauschen dreidimensional ermittelt wird, wobei die dritte Dimension eine zeitliche Entwicklung der Projektionshelligkeitswerte zur Verwendung bei der Anpassung als veränderliche Basis unter oder bei nicht vorhandener virtueller physikalischer Interaktion beschreibt. Das bedeutet, es ist auch eine Anpassung der Projektionshelligkeiten ohne physikalische Interaktion denkbar, um ein lebhaftes, dynamisches und interessantes Lichtmuster bereitzustellen, was immer dann zeitlich und räumlich nützlich sein kann, wenn keine oder nur sehr geringe virtuelle physikalische Interaktion vorliegt, beispielsweise aufgrund einem weit entfernten und/oder anderweitig nicht beeinflussenden beziehungsweise keinem detektierten Umgebungsmerkmal. Konkret für die Projektionshelligkeiten kann also in einer dreidimensionalen ersten Rauschdomäne in der Richtung, die nicht der Ermittlung der Start-Projektionshelligkeiten dient, eine zeitliche Änderung abgerufen werden.

Doch auch allgemein kann es zweckmäßig sein, eine gewisse Grunddynamik zur Ergänzung der virtuellen physikalischen Interaktion hinzuzufügen. Mithin sieht eine besonders vorteilhafte Ausgestaltung der vorliegenden Erfindung vor, dass die Anpassungsinformation unter zusätzlicher Berücksichtigung einer randomisierten und/oder physikalisch basierten virtuellen Grunddynamik, die der virtuellen physikalischen Interaktion überlagert ist, angepasst wird. Ein Beispiel für eine derartige Grunddynamik bezogen auf die Projektionshelligkeiten ist die bereits diskutierte dreidimensionale Erzeugung des ersten Gradientenrauschens, um auch eine möglichst sprungfreie, angenehme und kontinuierliche Veränderung der Schattierungen der Polygonflächen zu erreichen.

Auch generell kann vorgesehen sein, dass die Grunddynamik als eine weiche, kontinuierliche Dynamik ermittelt wird, insbesondere unter Verwendung von Sprünge begrenzenden und/oder vermeidenden Randbedingungen. Hierbei ist es insbesondere denkbar, vergleichbar zu der bereits beschriebenen Anpassung von Interaktionsparametern der virtuellen physikalischen Interaktion in Abhängigkeit von Zusatzinformationen und/oder der weiteren Anpassung des Polygonnetzes in Abhängigkeit wenigstens einer Zusatzinformation, dass wenigstens ein die Grunddynamik beschreibender Grundparameter in Abhängigkeit von der Zusatzinformation angepasst wird. Somit kann auch die Grunddynamik, insbesondere auch eine Grundbewegung, durch Zusatzinformationen der aktuellen Gesamtsituation angepasst werden, beispielsweise im Hinblick auf die Stimmung des Fahrers, einen gewählten Fahrmodus, einen aktuellen Betriebszustand eines Fahrzeugsystems zur Ausführung einer Fahrzeugfunktion zur vollständig automatischen Führung des Kraftfahrzeugs und dergleichen.

Dabei kann die Grunddynamik, insbesondere eine Grundbewegung der Grunddynamik, auch virtuell physikalischen Gegebenheiten nachgebildet sein. Beispielsweise kann vorgesehen sein, dass die Grunddynamik zumindest teilweise einer Brown'schen Bewegung nachgebildet ist.

Vorteilhaft kann es jedoch auch sein, wenn, wie bereits dargelegt wurde, die virtuelle Grunddynamik wenigstens teilweise randomisiert ist, also durch ein Zufallsprinzip erzeugt wird. Eine Randomisierung, das bedeutet, zufallsbasierte Generierung, hat den Vorteil, dass ein einzigartiges Aussehen und Verhalten geschaffen werden kann. Dabei sei an dieser Stelle noch angemerkt, dass das Vorsehen einer randomisierten und/oder physikalisch basierten virtuellen Grunddynamik auch unabhängig von der virtuellen physikalischen Interaktion bereits vorteilhaft sein kann, um eine lebendige, dynamische Darstellung zu schaffen. Mit anderen Worten kann statt der virtuellen physikalischen Interaktion auch vorgesehen sein, dass zur dynamischen Anpassung des Lichtmusters in einem Dynamiksubmodus des Polygonbetriebsmodus eine randomisierte und/oder physikalisch basierte virtuelle Grunddynamik ermittelt wird, wobei das Polygonnetz vor der Ausgabe des Lichtmusters auf Grundlage der rechnerisch ermittelten Grunddynamik angepasst wird.

In einer konkreten, besonders vorteilhaften Ausgestaltung der vorliegenden Erfindung kann vorgesehen sein, dass die Bewegung von Eckpunkten im Rahmen der Grunddynamik auf der Grundlage eines zweiten, zweidimensionalen Gradientenrauschens erfolgt. Die Verwendung eines Gradientenrauschens zur Veränderung der Bewegung der Eckpunkte auf einer Kreisbahn graduell hat den Vorteil, dass wiederum zu starke Sprünge vermieden werden und eine harmonische, kontinuierliche Grundbewegung resultiert. Hierbei kann insbesondere vorgesehen sein, dass die Bewegung bewegbarer Eckpunkte im Rahmen der Grunddynamik auf einer durch das Gradientenrauschen angepassten Kreisbahn erfolgt. Zur Anpassung der Kreisbahn kann vorgesehen sein, dass der lokale Rauschwert des zweiten Gradientenrauschens am Ort der Kreisbahn auf den Radius addiert wird, um die angepasste Kreisbahn zu ermitteln. Aufgrund des zweidimensionalen zweiten Gradientenrauschens werden Sprünge auch bei der graduellen Veränderung der Kreisbahn im zweidimensionalen Raum vermieden. Letztlich wird also die Kreisbewegung auf die zweidimensionale zweite Rauschdomäne angewendet, indem zu dem Radius des Kreises der jeweilige Rauschwert addiert wird. Es entsteht eine geschlossene, verrauschte Kreisbahn durch Anwendung des zweidimensionalen, zweiten Gradientenrauschens.

Dabei kann auch das zweite Gradientenrauschen zweckmäßigerweise nach einer Simplex-Noise-Methode und/oder einer Perlin-Noise-Methode und/oder einer Wavelet-Noise-Methode erzeugt werden.

Allgemein kann im Rahmen der vorliegenden Erfindung, um eine graduelle, wenig sprunghafte Variation der Schattierung der Polygonflächen zu erreichen, vorgesehen sein, dass die Projektionshelligkeiten benachbarter Polygonflächen an den Kanten sich maximal um einen, insbesondere von einer der Projektionshelligkeiten abhängigen, Übergangsschwellwert unterscheidend gewählt werden und/oder die Projektionshelligkeitsverläufe über von Polygonflächen abgedeckten Anteilen des Lichtmusters tiefpassgefiltert werden und/oder im Rahmen der Ermittlung der Anpassungsinformation wenigstens eine Projektionshelligkeit wenigstens einer der Polygonflächen in Abhängigkeit von der Projektionshelligkeit wenigstens einer benachbarten Projektionsfläche gewählt wird. Denkbar ist also beispielsweise eine Anpassung der Schattierungen an Nachbarpolygone, was dem Polygonnetz einen organischen Charakter, ähnlich wie bei Wolken, verleiht. Es kann eine graduelle Schattierung der einzelnen Polygonflächen erreicht werden, insbesondere eine kontinuierliche Änderung abhängig vom Ort der Polygonfläche und der Zeit. Beispielsweise ist die Verwendung des ersten Gradientenrauschens in der dritten Dimension eine Möglichkeit, eine derartige organisch wirkende, wolkenartige Darstellung zu erreichen.

**In** zweckmäßiger Weiterbildung der Erfindung kann vorgesehen sein, dass das Lichtmuster, insbesondere das Polygonnetz, wenigstens teilweise für eine vordefinierte Betrachterposition rechnerisch so verzerrt wird, dass sich eine perspektivisch korrekte Darstellung von der Betrachterposition ergibt. Während es dabei grundsätzlich denkbar ist, eine perspektivisch korrekte Darstellung von einer Betrachterposition innerhalb des Kraftfahrzeugs, beispielsweise einer Fahrerposition, anzustreben, kann eine Weiterbildung der Erfindung auch vorsehen, dass wenigstens zeitweise als die Betrachterposition eine Position außerhalb des Kraftfahrzeugs verwendet wird, welche die Position einer dem Kraftfahrzeug zugeordneten Person außerhalb des Kraftfahrzeugs und/oder die Position eines Adressaten einer durch das Lichtmuster übermittelten Warn- und/oder Hinweisfunktion, insbesondere die Position eines Fußgängers, ist. Es kann also, allgemein gesagt, Verzerrung für unterschiedliche Blickwinkel vorgesehen werden, welche beispielsweise ebenso in das bereits erwähnte Vorverzerrungsverfahren integriert werden kann. Hierdurch kann auch eine optimierte Darstellung für Außenstehende erreicht werden, beispielsweise, wenn ein Fahrer zum Kraftfahrzeug zurückkehrt, da dann die Darstellung stets für seine aktuelle Position optimiert werden kann, insbesondere auch im Rahmen der hier beschriebenen Anpassung des Polygonnetzes.

Die Erfindung betrifft auch ein Kraftfahrzeug mit einer Scheinwerfervorrichtung, wobei die Scheinwerfervorrichtung eine Projektionseinrichtung und eine Steuereinheit, die zur Ansteuerung der Projektionseinrichtung zur Projektion eines vorgegebenen Lichtmusters in einem vorbestimmten Projektionsbereich der Projektionseinrichtung ausgebildet ist, aufweist, wobei das Lichtmuster in einem Polygonbetriebsmodus der Scheinwerfervorrichtung ein Polygonnetz mit durch Projektionspunkte als Eckpunkte definierten, Polygonkanten aufweisenden Polygonflächen umfasst und den Polygonflächen wenigstens teilweise unterschiedliche Projektionshelligkeiten zugeordnet sind, wobei die Steuereinheit auch zur Durchführung des erfindungsgemäßen Verfahrens ausgebildet ist. Sämtliche Ausführungen bezüglich des erfindungsgemäßen Verfahrens lassen sich analog auf das erfindungsgemäße Kraftfahrzeug übertragen, mit welchem mithin ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Ablaufplan eines Ausführungsbeispiels des erfindungsgemäßen Verfahrens,
- Fig. 2: Unterschritte zur Generierung eines Polygonnetzes,
- Fig. 3: eine Skizze zur Erläuterung der Unterschritte der Fig. 2,
- Fig. 4: ein schematischer Verlauf eines Gradientenrauschens,
- Fig. 5: eine Illustration einer ersten möglichen virtuellen physikalischen Interaktion mit einem Umgebungsmerkmal,
- Fig. 6: eine Illustration einer zweiten möglichen virtuellen physikalischen Interaktion mit einem Umgebungsmerkmal,
- Fig. 7 - 11: einen Morph-Vorgang zwischen zwei Lichtfunktionen,
- Fig. 12: die Herleitung einer Grundbewegung eines Eckpunkts im Rahmen einer Grunddynamik, und
- Fig. 13: eine Prinzipskizze eines erfindungsgemäßen Kraftfahrzeugs.

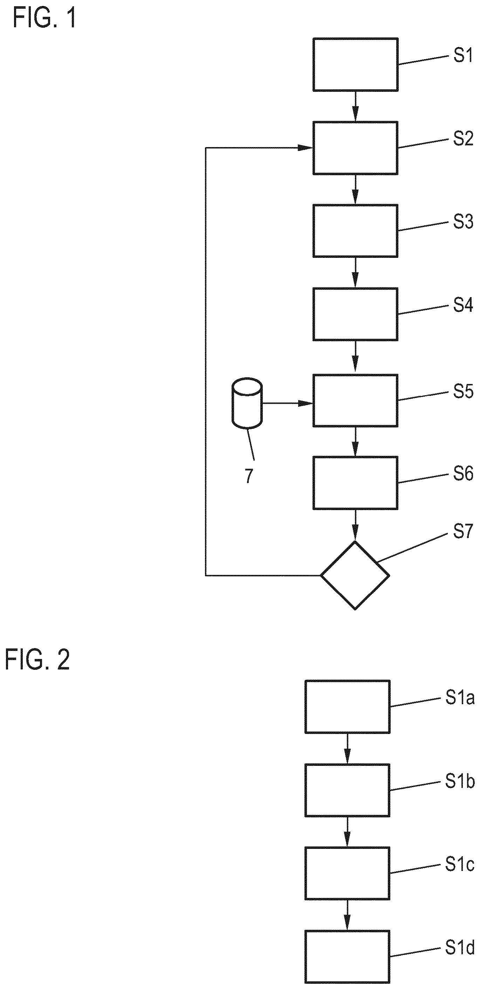

Fig. 1 zeigt einen Ablaufplan eines Ausführungsbeispiels des erfindungsgemäßen Verfahrens. Dieses wird durch eine Steuereinheit einer Scheinwerfervorrichtung in einem Kraftfahrzeug durchgeführt, wobei die Scheinwerfervorrichtung ferner auch eine Projektionseinrichtung aufweist. Dabei kann ein Lichtmuster, das in einen vorbestimmten Projektionsbereich der Projektionseinrichtung geworfen werden kann, ein Polygonnetz mit durch Projektionspunkte als Eckpunkte definierten, Polygonkanten aufweisenden Polygonflächen umfassen, wobei den Polygonflächen wenigstens teilweise unterschiedliche Projektionshelligkeiten zugeordnet sind. Dabei werden vorliegend in den hier dargestellten Beispielen Dreiecke als Polygone herangezogen; grundsätzlich lässt sich das hier Dargelegte jedoch auch auf andere Polygone übertragen.

Das Polygonnetz als Teil des Lichtmusters beziehungsweise Lichtmuster wird in einem Polygonbetriebsmodus ausgegeben und kann in einem Dynamiksubmodus des Polygonbetriebsmodus dynamisch und lebendig dargestellt werden. Dabei sei an dieser Stelle noh angemerkt, dass das Lichtmuster selbstverständlich auch mehrere Polygonnetze umfassen kann, wenn sich Polygone voneinander lösen. Insbesondere sind auch durch einzelne Polygone gebildete Polygonnetze denkbar.

Dabei wird in einem Schritt S1 der Polygonbetriebsmodus mit einer dynamischen Anpassung des Lichtmusters aktiviert, so dass in dem Schritt S1 eine Startkonfiguration für das Polygonnetz ermittelt werden muss. Dies geschieht vorliegend in mehreren Teilschritten, wie durch Fig. 2 näher erläutert wird.

Dabei sei vorab noch allgemein angemerkt, dass das Polygonnetz vorliegend unmittelbar für einen aktuellen Ausleuchtbereich des Lichtmusters ermittelt wird, der ein Unterbereich eines maximal denkbaren Projektionsbereichs der Projektionseinrichtung sein kann, aber auch diesen gesamten Projektionsbereich umfassen kann. Der Projektionsbereich gibt also die maximale Größe eines Lichtmusters an. Es sind auch Ausführungsbeispiele denkbar, in denen das Polygonnetz grundsätzlich für den gesamten Projektionsbereich generiert wird, wobei dann durch Vorgehensweisen wie Alpha-Blending der Ausleuchtbereich letztlich aus dem Polygonnetz ausgeschnitten und tatsächlich dargestellt werden kann.

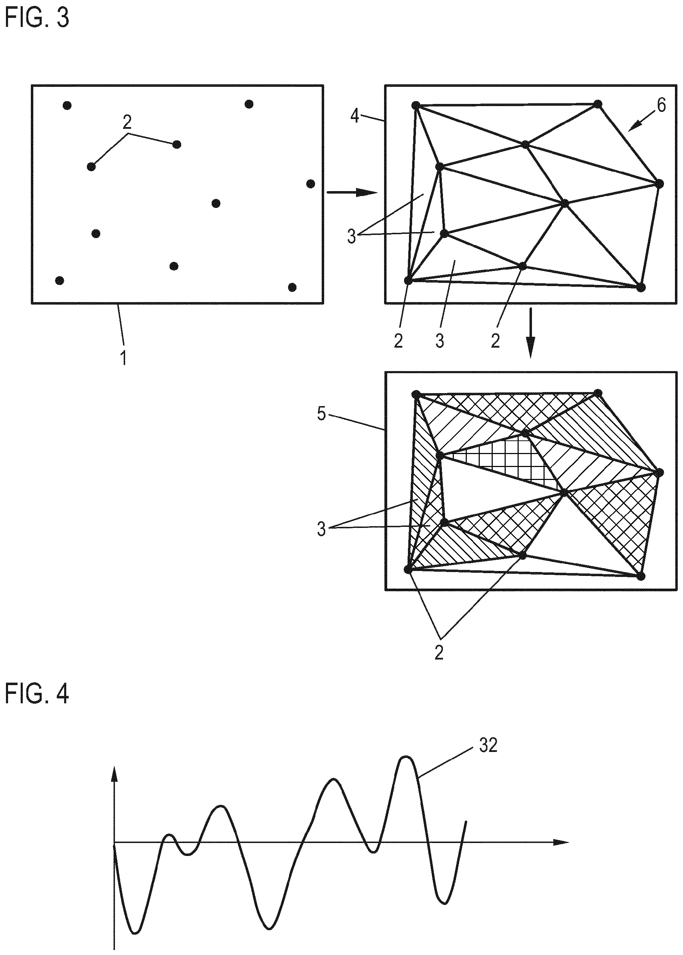

In einem Schritt S1a wird zunächst, wie im Teilbild 1 der Fig. 3 gezeigt, eine Punktewolke gleich verteilter, zukünftiger Eckpunkte 2 erzeugt, konkret eine Poisson-Disk-Verteilung gemäß einem Bridson-Algorithmus zur zufallsbasierten Erzeugung einer räumlich gleichmäßig verteilten Punktemenge. Alternativ einsetzbare Verfahren umfassen Mitchell's Best Candidate-Algorithmen sowie einheitliche Zufallsstichproben. Die Erzeugung der Punktewolke erfolgt dabei durch eine Generierungsfunktion, die den Bridson-Algorithmus (beziehungsweise eine entsprechende Alternative) enthält. In einem Schritt S1b werden durch eine Verbindungsfunktion der Eckpunkte 2 die Polygonflächen 3 definiert, wie im Teilbild 4 der Fig. 3 erläutert ist. Dieser Vorgang kann vorliegend, nachdem die Polygone Dreiecke sind, als Triangulation bezeichnet werden, wobei vorliegend eine Delaunay-Triangulation zur Erzeugung wohlgeformter Dreiecke ohne Überschneidung genutzt wird. Wohlgeformt bedeutet dabei eine Maximierung der Minimalwinkel der Dreiecke. Als alternatives Verfahren im Rahmen der Verbindungsfunktion kann Graham's Scan eingesetzt werden.

In einem Schritt S1c wird dann eine Zuordnungsfunktion verwendet, um den Polygonflächen 3 Projektionshelligkeiten zuzuordnen, die in Teilbild 5 der Fig. 3 als unterschiedliche Schraffuren gezeigt sind. Dieser Vorgang kann auch Schattierung genannt werden. Hierzu sollen vorliegend bereits bei der Generierung des Polygonnetzen mit seinen Projektionshelligkeiten graduelle Übergänge der Schattierung benachbarter Polygonflächen 3 zur Vermeidung von Helligkeitssprüngen geschaffen werden, um eine Schattierung vergleichbar mit Wolken zu erreichen. Hierzu wird ein erstes, vorliegend dreidimensionales Gradientenrauschen mit einer Simplex-Noise-Methode generiert. Alternative denkbare Methoden sind Perlin-Nose-Methoden und/oder Wavelet-Noise-Methoden. Die Besonderheit des Gradientenrauschens ist, wie in Fig. 4 an einem eindimensionalen Verlauf 6 schematisch gezeigt, dass charakteristischerweise keine starken Sprünge im Vergleich zum weißen Rauschen auftreten.

Es entsteht eine dreidimensionale Rauschdomäne, die in zwei der Dimensionen den Projektionsbereich oder zumindest den Ausleuchtbereich abdeckt. Eine Zuordnung von Projektionshelligkeiten aufgrund des dreidimensionalen Gradientenrauschens geschieht in einer untersten zweidimensionalen Schicht der dreidimensionalen Rauschdomäne, beispielsweise durch Wahl des Rauschwerts am Flächenschwerpunkt oder aber durch Mittelwertbildung über Polygonflächen 3.

Zudem wird ausgehend von dieser ersten, am Rand der dreidimensionalen Rauschdomäne gelegenen Schicht für jede weitere in der dritten Dimension folgende Schicht die Rauschverteilung gespeichert und zu einem späteren Zeitpunkt zur Bereitstellung einer Grunddynamik im zeitlichen Sinne verwendet. Hierbei können bereits zu diesem Zeitpunkt, beispielsweise über eine Fortsetzung des Flächenschwerpunkts in die dritte Dimension, Projektionshelligkeitswerte für zukünftige Zeitschritte zugeordnet und gespeichert werden, denkbar ist es jedoch auch, die dreidimensionale Rauschdomäne des ersten Gradientenrauschens vorzuhalten und die entsprechenden Projektionshelligkeiten dann gemäß dem aktuellen Polygonnetz zu bestimmen. Mithin wird eine dreidimensionale Rauschdomäne geschaffen, um zusätzlich eine zeitliche Änderung sozusagen im Voraus zu generieren, die ebenso sprungfrei, organisch und lebendig wirkt, da die Grundlage ja ein Gradientenrauschen ist.

Ergebnis der Schritte S1a - S1c ist mithin das Polygonnetz 6.

In einem Schritt S1d werden dann bestimmten Polygonmerkmalen der Polygonflächen 3 physikalische Eigenschaften zugeordnet, die später in verschiedenen virtuellen physikalischen Interaktionen genutzt werden sollen. Polygonmerkmale umfassen dabei die Polygonflächen als Ganzes, aber auch Polygonkanten und/oder Eckpunkte 2, wobei unterschiedlichen Eckpunkten 2, unterschiedlichen Polygonkanten beziehungsweise unterschiedlichen Polygonflächen 3 auch unterschiedliche physikalische Eigenschaften zugeordnet werden können. Die physikalischen Eigenschaften können beispielsweise eine Masse, eine Geschwindigkeit, ein Reibungswert, Elastizitätswert, eine Festigkeit, wenigstens eine elektromagnetische Eigenschaft (beispielsweise eine Ladung) und/oder auch Federeigenschaften umfassen.

Dabei sei bereits an dieser Stelle angemerkt, dass sowohl die Generierung des Polygonnetzes 6 als auch die Zuordnung physikalischer Eigenschaften bereits durch eine nutzerseitige Parametrierung beeinflusst sein können, der beispielsweise auswählen kann, wie die Grunddynamik ausgestaltet sein soll und/oder welche virtuellen physikalischen Interaktionen erwünscht sind. Auch eine automatische Anpassung kann, insbesondere auch über das Verfahren hinweg, erfolgen, beispielsweise anhand einer automatisch bestimmten Stimmung des Nutzers, anhand eines gewählten Fahrmodus und dergleichen. Verschiedene Anpassungsmöglichkeiten, auch im Hinblick auf Interaktionsparameter, benutzende Zusatzinformationen und dergleichen wurden im vorstehenden, allgemeineren Teil dieser Beschreibung bereits diskutiert.

Zurückkehrend zu Fig. 1 werden nun in einem Schritt S2 Messdaten und/oder Betriebsdaten des Kraftfahrzeugs aufgenommen, beispielsweise über geeignete Sensoreinrichtungen des Kraftfahrzeugs, aufgrund allgemein ausgetauschter Betriebsdaten und/oder auch durch Abruf mittels einer Kommunikationseinrichtung des Kraftfahrzeugs, beispielsweise aus dem Internet. Diese Betriebsdaten und/oder Messdaten beschreiben Umgebungsmerkmale zumindest im Projektionsbereich, wobei sowohl Objekte als auch Umgebungszustände umfasst sein können. Umgebungszustände im Projektionsbereich können dabei auch durch den Betrieb des Kraftfahrzeugs entstehen, beispielsweise was Fahrtwind angeht.

Im Schritt S3 wird mittels dieser Umfeld- und/oder Betriebsdaten ein Umgebungsmodell zumindest für den Projektionsbereich derart bereitgestellt, dass eine virtuelle physikalische Interaktion der Polygonflächen 3, aufgrund der zugeordneten physikalischen Eigenschaften, mit dem Umgebungsmodell, konkret den darin beschriebenen Umgebungsmerkmalen, rechnerisch ermittelt werden kann. In einfachen Fällen können dabei wenigstens ein Teil der vorgesehenen virtuellen physikalischen Interaktionen durch mathematische Zusammenhänge beschrieben sein, möglich sind jedoch auch komplexere Umgebungsmodelle, die als Grundlage einer Simulation zur Berechnung herangezogen werden können, insbesondere im Rahmen einer Physik-Engine, wie im Folgenden noch näher erläutert werden wird.

Nach der Bereitstellung des Umgebungsmodells im Schritt S3 oder aber bevorzugt parallel zu diesen kann im Schritt S4 auch bereits eine virtuelle Grunddynamik, die der virtuellen physikalischen Interaktion zu überlagern ist, ermittelt werden. Die Grunddynamik wird als weiche, kontinuierliche Dynamik ermittelt und kann einer Brown'schen Bewegung oder sonstigen physikalischen Grundprinzipien nachgebildet sein, aber auch randomisiert sein, wobei dann bevorzugt ein zweites, zweidimensionales Gradientenrauschen eingesetzt wird, wie im Folgenden noch genauer erläutert werden wird.

In einem Schritt S5 wird dann eine Anpassungsinformation ermittelt, um das Polygonnetz vor der Ausgabe des Lichtmusters anzupassen. In die Anpassungsinformation geht selbstverständlich die virtuelle physikalische Interaktion der Polygonflächen 3 mit dem Umgebungsmodell ein, insbesondere überlagert mit der beschriebenen Grunddynamik, die hinsichtlich der Schattierungen im Übrigen, wie auch zu Schritt S1c bereits erläutert wurde, auf dem ersten Gradientenrauschen in der dritten Dimension basieren kann. Zusätzlich hierzu geht in die Anpassungsinformation jedoch auch wenigstens eine Zusatzinformation 7 ein, die vielfältig ausgestaltet sein kann, um die dynamische Anpassung weiter auszugestalten, wobei insbesondere auch auf die in der vorstehenden Beschreibung beschriebenen Ausgestaltungen hingewiesen wird. Die Zusatzinformation wird von wenigstens einer Fahrzeugfunktion bereitgestellt und kann beispielsweise eine von dieser auszugebende Information, beispielsweise eine Spurverlassenswarnung, betreffen. Auch kann die Zusatzinformation Wechsel von einer Lichtfunktion zu einer anderen beschreiben, wobei dann ein kontinuierlicher, dynamischer Übergang geschaffen wird, welcher durch eine Abfolge von Anpassungsinformationen beschrieben wird, die entsprechend in den jeweiligen Zeitschritten im Schritt S5 eingehen. Eine Fahrzeugfunktion, die Zusatzinformationen 7 liefert, kann auch eine Fahrfunktion zur vollständig automatischen Führung des Kraftfahrzeugs sein, wo beispielsweise geplante Fahrmanöver, erkannte Objekte und aktuelle Betriebszustände des diese Fahrfunktion ausführenden Fahrzeugsystems in die dynamische Anpassung beziehungsweise die Ermittlung der Anpassungsinformation (durch Parametrierung) übernommen werden. Im Hinblick auf eine solche Modifikation der Ermittlung der Anpassungsinformation ist insbesondere eine einen eingestellten Fahrmodus des Kraftfahrzeugs betreffende Zusatzinformation 7 zu nennen, wobei bei einem sportlichen Fahrmodus im Vergleich zu einem komfortableren Fahrmodus die Dynamik der Anpassung erhöht werden kann, beispielsweise auch hinsichtlich der Grunddynamik, die beschleunigt werden kann.

Die im Schritt S5 insgesamt ermittelte Anpassungsinformation wird dann, wie erwähnt, genutzt, um das Polygonnetz anzupassen, wonach das Lichtmuster mit dem angepassten Polygonnetz 6 im Schritt S6 mittels der Projektionseinrichtung ausgegeben wird. Dabei sei an dieser Stelle noch klarstellend angemerkt, dass alle bislang beschriebenen Schritte durch die Steuereinheit der Scheinwerfervorrichtung durchgeführt werden. Dies gilt letztlich auch für den Schritt S7, in dem überprüft wird, ob der Polygonbetriebsmodus beendet werden soll oder weiter aufrechterhalten werden soll. Ist zweiteres der Fall, wird im nächsten Zeitschritt wieder mit Schritt S2 fortgefahren, so dass tatsächlich eine kontinuierliche Anpassung des Polygonnetzes erfolgt, um ein immersives, organisches Erlebnis zu schaffen. Hierbei kann die die Zeitschritte bestimmende Aktualisierungsfrequenz beispielsweise größer als 50 Hz, insbesondere größer als 100 Hz, sein.

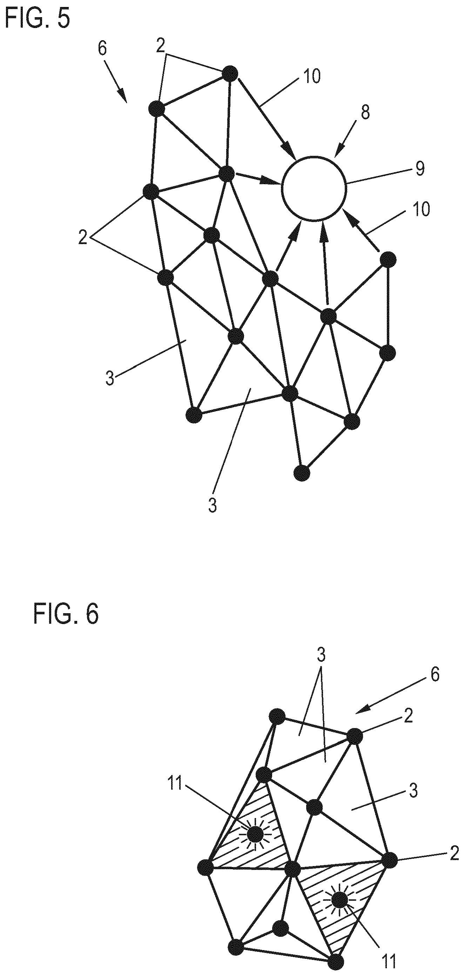

Fig. 5 zeigt ein erstes Beispiel für eine mögliche virtuelle physikalische Interaktion, in diesem Fall mit einem Objekt 8. Das Objekt 8 kann beispielsweise ein Fußgänger 9 sein, der über eine Sensoreinrichtung des Kraftfahrzeugs erfasst wird. Im vorliegenden Fall umfasst die virtuelle physikalische Interaktion eine magnetische Anziehungskraft auf wenigstens einen Teil der Eckpunkte 2 der Polygonflächen 3 des Polygonnetzes 6, wie durch die Pfeile 10 angedeutet ist. Hierbei sind auch abstoßende Kräfte denkbar; insbesondere auch ein Kraftverlauf, der näher zu dem Objekt 9 hin abstoßend wird, so dass eine Art "Bounce-Effekt" an dem Objekt 8 entsteht. Auch andere Arten virtueller physikalischer Interaktionen mit Objekten 8 sind selbstverständlich denkbar, beispielsweise Energieeintrag/Energieentzug, der zu helleren oder dunkleren Projektionshelligkeiten der Polygonflächen 3 führt und dergleichen.

Fig. 6 erläutert beispielhaft eine virtuelle physikalische Interaktion mit einem Umgebungszustand, hier einer Wetterbedingung, als Umgebungsmerkmal, vorliegend Niederschlag, der durch mittels einer Sensoreinrichtung des Kraftfahrzeugs detektierbare Tropfen 11 dargestellt ist. Die Polygonflächen 3 wirken dabei als Tropfendetektoren, indem sie kurz mit einer höheren Projektionshelligkeit aufleuchten, wenn in ihnen ein Tropfen niedergeht. Andere Umgebungszustände können beispielsweise Wind, gegebenenfalls auch umfassend Fahrtwind, den die vom Kraftfahrzeug mitbewegten Polygonflächen 3 virtuell ausgesetzt sein können, Temperaturen und dergleichen. Beispielsweise können Punkte 2 vom Wind gezerrt werden und/oder Polygonflächen 3, die Hitze widerspiegelnd, flimmern.

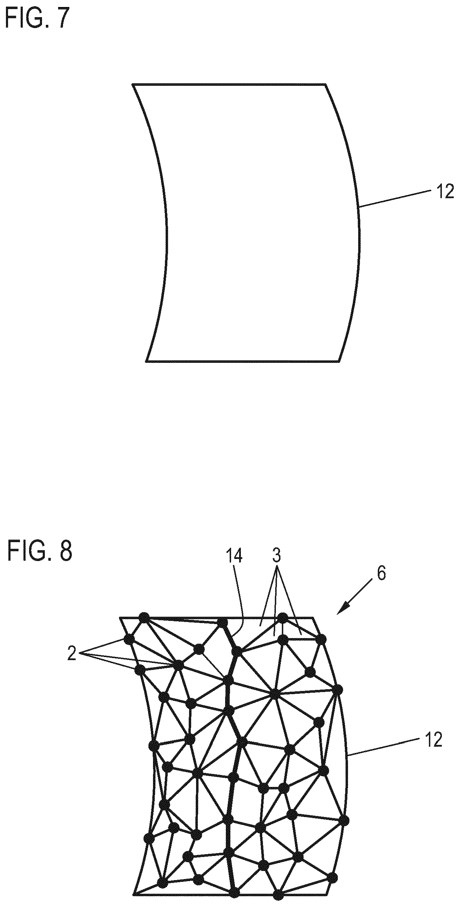

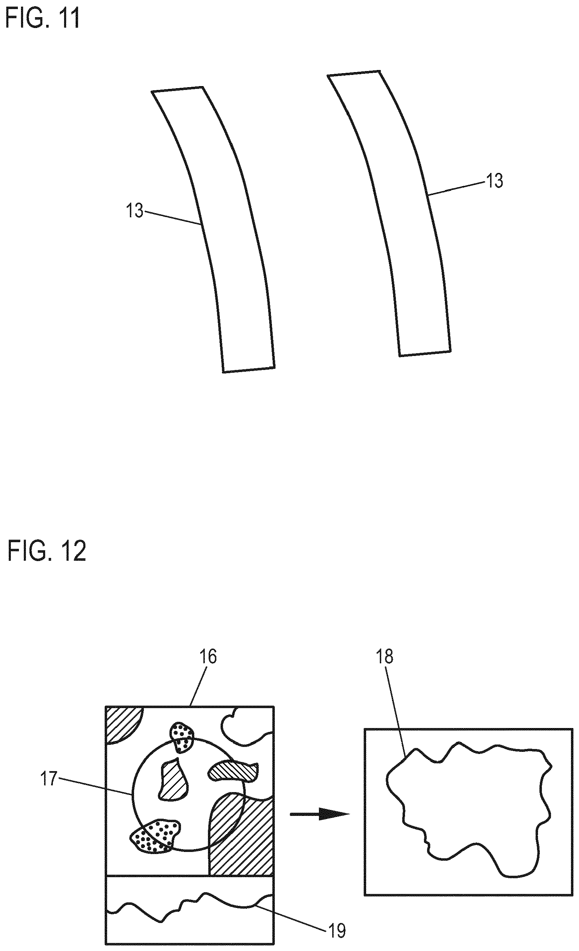

Die Figuren 7 bis 11 erläutern einen Übergang von einer Lichtfunktion zu einer anderen Lichtfunktion unter Nutzung einer Abfolge von Anpassungsinformationen. Dabei wird vorliegend gemäß Fig. 7 von einem Ausleuchtbereich 12 eines Spurlichts ausgegangen, wobei der Polygonbetriebsmodus nicht aktiv ist. Das Lichtmuster ist hier also ein durchgängiger Lichtteppich, der gemäß einer aktuell befahrenen Spur des Kraftfahrzeugs ausgeformt ist. Dabei soll nun auf ein Baustellenlicht umgeschaltet werden, welches wiederum ohne den Polygonbetriebsmodus arbeiten soll, und links und rechts zwei die Breite des Kraftfahrzeugs anzeigende Lichtteppiche als neuen Ausleuchtbereich 13, wie in Fig. 11 dargestellt umfassen soll. Um den Übergang zwischen diesen Lichtfunktionen zu realisieren, wird zunächst im Ausleuchtbereich 12 der Polygonbetriebsmodus aktiviert und ein Polygonnetz 6 hinzugefügt. Die Definition der Startkonfiguration des Polygonnetzes 6, welches beispielsweise gemäß der Schritte S1a bis S1d ermittelt werden kann, ist durch die Grenzen des aktuellen Ausleuchtbereichs 12 beschränkt.

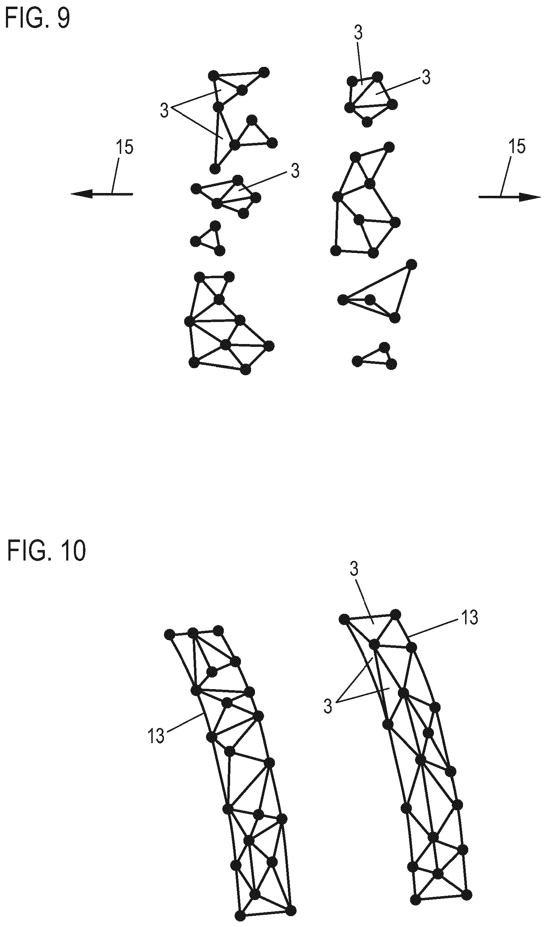

Zur Bildung des neuen Ausleuchtbereichs 13 werden von einer gemeinsamen Kante 14 ausgehend sich auseinander bewegende Polygonflächen 3 dargestellt, vgl. Fig. 9, Pfeile 15, die sich zu den nach der Aufteilung gewünschten Anteilen des Ausleuchtbereichs 13 zusammensetzen, vgl. Fig. 10. Danach kann der Polygonbetriebsmodus wieder deaktiviert werden.

Fig. 12 erläutert eine Möglichkeit zur Ermittlung einer Grundbewegung von Eckpunkten 2 der Polygonflächen 3 im Rahmen der Grunddynamik. Hierbei wird ein zweites zweidimensionales Gradientenrauschen, beispielsweise wiederum mit einer Simplex-Noise-Methode, erzeugt, dessen Rauschdomäne 16 in Fig. 12 links gezeigt ist. Dieser überlagert ist ein Kreis 17 dargestellt, der in einen randomisierten, geschlossenen Bewegungspfad 18, siehe rechtes Teilbild, umgewandelt werden soll. Hierzu zeigt zunächst der untere Anteil des linken Teilbildes der Fig. 12 den Verlauf 19 des zweiten Gradientenrauschens entlang des Kreises 17. Zur Erzeugung der angepassten Kreisbahn 18 wird an jedem Punkt der lokale Rauschwert gemäß dem Verlauf 19 am Ort der Kreisbahn 17 auf den Radius addiert. Aufgrund der Verwendung des zweiten Gradientenrauschens treten hierbei keine Sprünge auf, so dass ein geschlossener Bewegungspfad als angepasste Kreisbahn 18 resultiert.

Es sei angemerkt, dass zur Erzeugung einer größeren Anzahl von Konfigurationen im Polygonnetz 6 für unterschiedliche Eckpunkte 2 auch unterschiedliche Radien der Ausgangs-Kreisbahn 17 gewählt werden können.

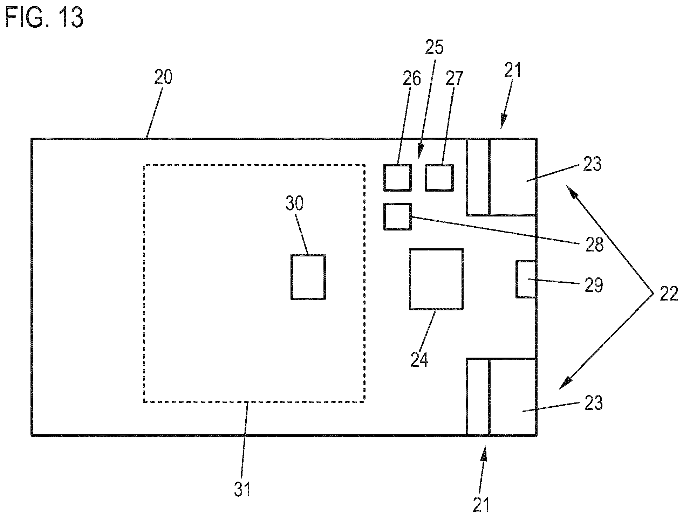

Fig. 13 zeigt schließlich eine Prinzipskizze eines erfindungsgemäßen Kraftfahrzeugs 20. Das Kraftfahrzeug 20 umfasst eine Scheinwerfervorrichtung 21 mit einer Projektionseinrichtung 22, die durch eine rechte und eine linke Projektionseinheit 23 gebildet wird. Der Betrieb der Scheinwerfervorrichtung 21 wird durch eine Steuereinheit 24, beispielsweise ein Steuergerät des Kraftfahrzeugs 20, gesteuert.

Die Steuereinheit 24 ist dabei zur Durchführung des erfindungsgemäßen Verfahrens, beispielsweise in der gemäß Fig. 1 beschriebenen Ausgestaltung, ausgebildet und kann entsprechende Funktionseinheiten aufweisen. Um die Messdaten und die Betriebsdaten erfassen zu können, sind entsprechende Erfassungsmittel 25 vorgesehen, beispielsweise eine Sensoreinrichtung 26 mit verschiedenen Sensoren, die auf die Umgebung des Kraftfahrzeugs gerichtet sind, eine Kommunikationseinrichtung 27, über die insbesondere auch Informationen aus dem Internet und/oder von anderen Verkehrsteilnehmern (c2x) abgerufen werden können. Zusatzinformationen kann die Steuereinheit 24 von weiteren Fahrzeugsystemen 28 erhalten.

Nachdem in Ausführungsbeispielen des erfindungsgemäßen Verfahrens auch vorgesehen sein kann, diverse Effekte, insbesondere Interaktionsereignisse der virtuellen physikalischen Interaktion, durch eine akustische Ausgabe zu begleiten, kann das Kraftfahrzeug 20 ferner ein akustisches Ausgabemittel 29, das auf den Außenraum wirkt, aufweisen, genau wie ein akustisches Ausgabemittel 30 in einem Innenraum 31 des Kraftfahrzeugs 20. Das akustische Ausgabemittel 29 für den Außenraum ist insbesondere dazu ausgebildet, Geräusche derart zu erzeugen, dass sie von einem Punkt in der Umgebung, insbesondere im Projektionsbereich, stammen. Beispielsweise kann in der Ausgestaltung gemäß Fig. 6 ein Ton ausgegeben werden, wann immer eine der Polygonflächen 3 kurz aufleuchtet.

## Patentansprüche

1. Verfahren zum Betrieb einer Scheinwerfervorrichtung (21) eines Kraftfahrzeugs (20), wobei die Scheinwerfervorrichtung (21) eine Projektionseinrichtung (22) und eine Steuereinheit (24), die zur Ansteuerung der Projektionseinrichtung (22) zur Projektion eines vorgegebenen Lichtmusters in einem vorbestimmten Projektionsbereich der Projektionseinrichtung (22) ausgebildet ist, aufweist, wobei das Lichtmuster in einem Polygonbetriebsmodus der Scheinwerfervorrichtung (21) ein Polygonnetz (6) mit durch Projektionspunkte als Eckpunkte (2) definierten, Polygonkanten aufweisenden Polygonflächen (3) umfasst und den Polygonflächen (3) wenigstens teilweise unterschiedliche Projektionshelligkeiten zugeordnet sind,
**dadurch gekennzeichnet,**
**dass** wenigstens einem Polygonmerkmal der Polygonflächen (3), insbesondere wenigstens den Eckpunkten (2), wenigstens eine physikalische Eigenschaft zugeordnet wird, wobei zur dynamischen Anpassung des Lichtmusters in einem Dynamiksubmodus des Polygonbetriebsmodus:
- zeitaktuelle Betriebsdaten des Kraftfahrzeugs (20) und/oder Messdaten des Kraftfahrzeugs (20) aufgenommen werden, die den Fahrzustand des Kraftfahrzeus (20) und/oder für die physikalische Eigenschaft relevante Umgebungsmerkmale in einer den Projektionsbereich umfassenden Umgebung des Kraftfahrzeugs (20) beschreiben,
- basierend auf den Betriebsdaten und/oder Messdaten ein Umgebungsmodell zumindest für den Projektionsbereich bereitgestellt wird, und
- das Polygonnetz (6) vor der Ausgabe des Lichtmusters auf Grundlage einer rechnerisch ermittelten Anpassungsinformation, die eine virtuelle physikalische Interaktion der Polygonflächen (3) mit dem Umgebungsmodell aufgrund der wenigstens einen zugeordneten physikalischen Eigenschaft beschreibt, angepasst wird.

2. Verfahren nach Anspruch 1,
**dadurch gekennzeichnet,**
**dass** eine Anpassung des Lichtmusters, insbesondere ausgehend von dem Lichtmuster eines vorangehenden Zeitschritts, für jeden Zeitschritt, in dem die Ausgabe mittels der Projektionseinrichtung (22) getaktet ist, erfolgt.

3. Verfahren nach Anspruch 1 oder 2,
**dadurch gekennzeichnet,**
**dass** die virtuelle physikalische Interaktion ein durch die Messdaten beschriebenes Objekt (8), insbesondere einen Fußgänger (9), in der Umgebung betrifft.

4. Verfahren nach Anspruch 3,
**dadurch gekennzeichnet,**
**dass** die virtuelle physikalische Interaktion eine Anziehungskraft und/oder Abstoßungskraft zwischen dem Objekt (8) und wenigstens einem der Polygonmerkmale, dem eine physikalische Eigenschaft zugeordnet ist, umfasst, und/oder dass die virtuelle physikalische Interaktion einen virtuellen Energieeintrag und/oder Energieentzug beschreibt, der durch Erhellung bzw. Verdunklung der Projektionshelligkeit der Polygonflächen (3) und/oder eine Erhöhung oder Verlangsamung der Bewegungsgeschwindigkeit des wenigstens einen Polygonmerkmals, insbesondere wenigstens eines Eckpunkts (2), dargestellt wird, und/oder dass die virtuelle physikalischen Interaktion ein Anhaften wenigstens eines der Eckpunkte (2) an dem Objekt (8) betrifft.

5. Verfahren nach Anspruch 3 oder 4,
**dadurch gekennzeichnet,**
**dass** wenigstens einem Interaktionsereignis der virtuellen physikalischen Interaktion, insbesondere eine Berührung zwischen wenigstens einem der Polygonmerkmale mit dem Objekt (8), eine akustische Ausgabeinformation zugeordnet ist, die bei Auftreten des Interaktionsereignissen mittels eines nach außerhalb des Kraftfahrzeugs (20) wirkenden akustischen Ausgabemittels (29) und/oder mittels eines auf einen Innenraum (31) des Kraftfahrzeugs (20) wirkenden akustischen Ausgabemittels (30) ausgegeben wird.

6. Verfahren nach einem der vorangehenden Ansprüche,
**dadurch gekennzeichnet,**
**dass** wenigstens ein Umgebungsmerkmal einen Umgebungszustand, insbesondere eine Wetterbedingung, beschreibt.

7. Verfahren nach einem der vorangehenden Ansprüche,
**dadurch gekennzeichnet,**
**dass** die Anpassungsinformation unter zusätzlicher Berücksichtigung wenigstens einer Zusatzinformation (7) einer Fahrzeugfunktion ermittelt wird.

8. Verfahren nach Anspruch 7,
**dadurch gekennzeichnet,**
**dass** die Zusatzinformation (7) einen durch eine, insbesondere wenigstens teilweise das Lichtmuster vorgebende, Fahrzeugfunktion gewünschten Übergang von einem aktuellen Ausleuchtbereich (12) des Lichtmusters in dem Projektionsbereich zu einem neuen Ausleuchtbereich (13) des Lichtmusters in dem Projektionsbereich beschreibt, wobei der Übergang über mehrere Zeitschritte durch eine Bewegung und/oder ein Hinzufügen und/oder ein Entfernen von Polygonflächen (3) zur Bildung des neuen Ausleuchtbereichs (13) erfolgt, welche durch eine Abfolge von Anpassungsinformationen beschrieben wird.

9. Verfahren nach Anspruch 7 oder 8,
**dadurch gekennzeichnet,**
**dass** die Fahrzeugfunktion eine Fahrfunktion zur vollständig automatischen Führung des Kraftfahrzeugs (20) ist.

10. Verfahren nach einem der vorangehenden Ansprüche,
**dadurch gekennzeichnet,**
**dass** durch eine Lichtfunktion des Kraftfahrzeugs (20) ein zu nutzender Ausleuchtbereich (12, 13) des Projektionsbereichs vorgegeben wird, der kleiner als das Polygonnetz (6) ist, wobei ein darzustellender Anteil des Polygonnetzes (6) durch Überlagerung mit dem zu nutzenden Ausleuchtbereich (12, 13) ermittelt wird und nur dieser Anteil projiziert wird.

11. Verfahren nach einem der vorangehenden Ansprüche,
**dadurch gekennzeichnet,**
**dass** zur initialen Ermittlung des Polygonnetzes (6) des Lichtmusters
- durch eine Generierungsfunktion eine Eckpunkte (2) beschreibende Punktewolke innerhalb des Projektionsbereichs generiert wird,
- durch eine Verbindungsfunktion der Eckpunkte (2) die Polygonflächen (3) definiert werden, und
- durch eine Zuordnungsfunktion den Polygonflächen (3) Projektionshelligkeiten zugeordnet werden.

12. Verfahren nach Anspruch 11,
**dadurch gekennzeichnet,**
**dass** der Generierungsalgorithmus eine Poisson-Disk-Abtastung, insbesondere einen Bridson-Algorithmus, umfasst und/oder dass als Polygonflächen (3) Dreiecke überschneidungsfrei bei Maximierung der Minimalwinkel der Dreiecke definiert werden, insbesondere mittels Delaunay-Triangulierung und/oder die Projektionshelligkeitswerte auf der Grundlage eines wenigstens zweidimensionalen, ersten Gradientenrauschens zugeordnet werden.

13. Verfahren nach einem der vorangehenden Ansprüche,
**dadurch gekennzeichnet,**
**dass** die Anpassungsinformation unter zusätzlicher Berücksichtigung einer randomisierten und/oder physikalisch basierten virtuellen Grunddynamik, die der virtuellen physikalischen Interaktion überlagert ist, angepasst wird.

14. Verfahren nach Anspruch 13,
**dadurch gekennzeichnet,**
**dass** die Bewegung von Eckpunkten (2) im Rahmen der Grunddynamik auf der Grundlage eines zweiten, zweidimensionalen Gradientenrauschens erfolgt, indem eine für die Bewegung vorgesehene Kreisbahn (17) durch das zweite Gradientenrauschen angepasst wird.

15. Kraftfahrzeug (20) mit einer Scheinwerfervorrichtung (21), wobei die Scheinwerfervorrichtung (21) eine Projektionseinrichtung (22) und eine Steuereinheit (24), die zur Ansteuerung der Projektionseinrichtung (22) zur Projektion eines vorgegebenen Lichtmusters in einem vorbestimmten Projektionsbereich der Projektionseinrichtung (22) ausgebildet ist, aufweist, wobei das Lichtmuster in einem Polygonbetriebsmodus der Scheinwerfervorrichtung (21) ein Polygonnetz (6) mit durch Projektionspunkte als Eckpunkte (2) definierten, Polygonkanten aufweisenden Polygonflächen (3) umfasst und den Polygonflächen (3) wenigstens teilweise unterschiedliche Projektionshelligkeiten zugeordnet sind,
**dadurch gekennzeichnet,**
**dass** die Steuereinheit (24) zur Durchführung eines Verfahrens nach einem der vorangehenden Ansprüche ausgebildet ist.

## Claims

1. Method for operating a headlight device (21) of a motor vehicle (20), wherein the headlight device (21) comprises a projector (22) and a control unit (24), which is designed for controlling the projector (22) for projecting a predefined light pattern in a predetermined projection region of the projector (22), wherein the light pattern in a polygon operating mode of the headlight device (21) comprises a polygon mesh (6) with polygon surfaces (3) which are defined by projection points as corner points (2) and have polygon edges and the polygon surfaces (3) are assigned at least in part different projection brightnesses,
**characterized**
**in that** at least one physical property is assigned to at least one polygon feature of the polygon surfaces (3), in particular to at least the corner points (2), wherein for the dynamic adaptation of the light pattern in a dynamic submode of the polygon operating mode:
- up-to-date operating data of the motor vehicle (20) and/or measurement data of the motor vehicle (20) are recorded which describe the driving state of the motor vehicle (20) and/or environmental features relevant to the physical property in an environment of the motor vehicle (20) encompassing the projection region,
- on the basis of the operating data and/or measurement data, an environment model is provided at least for the projection region, and
- the polygon mesh (6) is adapted before the output of the light pattern on the basis of computationally determined adaptation information describing a virtual physical interaction of the polygon surfaces (3) with the environment model on account of the at least one assigned physical property.

2. Method according to Claim 1,
**characterized**
**in that** an adaptation of the light pattern, in particular proceeding from the light pattern of a preceding time step, takes place for each time step in which the output is clocked by means of the projector (22).

3. Method according to Claim 1 or 2,
**characterized**
**in that** the virtual physical interaction relates to an object (8) described by the measurement data, in particular a pedestrian (9), in the environment.

4. Method according to Claim 3,
**characterized**
**in that** the virtual physical interaction comprises an attractive force and/or a repulsive force between the object (8) and at least one of the polygon features to which a physical property is assigned, and/or in that the virtual physical interaction describes a virtual energy input and/or energy extraction represented by brightening or darkening of the projection brightness of the polygon surfaces (3) and/or an increase or slowing down of the speed of movement of the at least one polygon feature, in particular at least one corner point (2), and/or in that the virtual physical interaction relates to an adhesion of at least one of the corner points (2) to the object (8).

5. Method according to Claim 3 or 4,
**characterized**
**in that** at least one interaction event of the virtual physical interaction, in particular a contact between at least one of the polygon features with the object (8), is assigned acoustic output information which, when the interaction event occurs, is output by means of an acoustic output means (29) acting towards the outside of the motor vehicle (20) and/or by means of an acoustic output means (30) acting on an interior (31) of the motor vehicle (20).

6. Method according to any of the preceding claims,
**characterized**
**in that** at least one environmental feature describes an environmental state, in particular a weather condition.

7. Method according to any of the preceding claims,
**characterized**
**in that** the adaptation information is determined additionally taking into account at least one item of additional information (7) of a vehicle function.

8. Method according to Claim 7,
**characterized**
**in that** the additional information (7) describes a transition from a current illumination region (12) of the light pattern in the projection region to a new illumination region (13) of the light pattern in the projection region, said transition being desired by a vehicle function, the latter in particular at least in part predefining the light pattern, wherein the transition takes place over a plurality of time steps by a movement and/or an addition and/or a removal of polygon surfaces (3) for the formation of the new illumination region (13), this being described by a sequence of items of adaptation information.

9. Method according to Claim 7 or 8,
**characterized**
**in that** the vehicle function is a driving function for fully automatic guidance of the motor vehicle (20).

10. Method according to any of the preceding claims,
**characterized**
**in that** an illumination region (12, 13) to be used of the projection region is predefined by a light function of the motor vehicle (20), said illumination region being smaller than the polygon mesh (6), wherein a portion of the polygon mesh (6) that is to be represented is determined by superimposition with the illumination region (12, 13) to be used and only this portion is projected.

11. Method according to any of the preceding claims,
**characterized**
**in that** for the initial determination of the polygon mesh (6) of the light pattern
- a generation function generates a point cloud describing corner points (2) within the projection region,
- a connection function of the corner points (2) defines the polygon surfaces (3), and
- an assignment function assigns projection brightnesses to the polygon surfaces (3).

12. Method according to Claim 11,
**characterized**
**in that** the generation algorithm comprises a Poisson disk sampling, in particular a Bridson algorithm, and/or in that triangles are defined as polygon surfaces (3) without overlap while maximizing the minimum angles of the triangles, in particular by means of Delaunay triangulation, and/or the projection brightness values are assigned on the basis of an at least two-dimensional, first gradient noise.

13. Method according to any of the preceding claims,
**characterized**
**in that** the adaptation information is adapted additionally taking into account randomized and/or physically based virtual basic dynamics superimposed on the virtual physical interaction.

14. Method according to Claim 13,
**characterized**
**in that** the movement of corner points (2) in the framework of the basic dynamics takes place on the basis of a second, two-dimensional gradient noise by virtue of a circular path (17) provided for the movement being adapted by the second gradient noise.

15. Motor vehicle (20) comprising a headlight device (21), wherein the headlight device (21) comprises a projector (22) and a control unit (24), which is designed for controlling the projector (22) for projecting a predefined light pattern in a predetermined projection region of the projector (22), wherein the light pattern in a polygon operating mode of the headlight device (21) comprises a polygon mesh (6) with polygon surfaces (3) which are defined by projection points as corner points (2) and have polygon edges and the polygon surfaces (3) are assigned at least in part different projection brightnesses,
**characterized**
**in that** the control unit (24) is designed to carry out a method according to any of the preceding claims.

## Revendications

1. Procédé pour faire fonctionner un arrangement phare (21) d'un véhicule automobile (20), l'arrangement phare (21) possédant un dispositif de projection (22) et une unité de commande (24) qui est configurée pour commander le dispositif de projection (22) en vue de projeter un motif lumineux prédéfini dans une zone de projection prédéterminée du dispositif de projection (22), le motif lumineux, dans un mode de fonctionnement polygonal de l'arrangement phare (21), comprenant un réseau polygonal (6) avec des surfaces polygonales (3) présentant des arêtes polygonales et définies par des points de projection en tant que sommets (2), et des luminosités de projection au moins partiellement différentes étant associées aux surfaces polygonales (3),
**caractérisé en ce que**
au moins une propriété physique est associée à au moins une caractéristique polygonale des surfaces polygonales (3), notamment au moins aux sommets (2), en vue de l'adaptation dynamique du motif lumineux dans un sous-mode dynamique du mode de fonctionnement polygonal :
- des données de fonctionnement actuelles du véhicule automobile (20) et/ou des données de mesure du véhicule automobile (20), lesquelles décrivent l'état de conduite du véhicule automobile (20) et/ou des caractéristiques environnementales pertinentes pour la propriété physique dans un environnement du véhicule automobile (20) qui englobe la zone de projection, étant enregistrées,
- un modèle d'environnement étant fourni au moins pour la zone de projection sur la base des données de fonctionnement et/ou des données de mesure, et
- le réseau polygonal (6) étant adapté avant l'émission du motif lumineux sur la base d'informations d'adaptation déterminées par calcul, lesquelles décrivent une interaction physique virtuelle des surfaces polygonales (3) avec le modèle d'environnement sur la base d'au moins une propriété physique associée.

2. Procédé selon la revendication 1,
**caractérisé en ce que**
une adaptation du motif lumineux, notamment à partir du motif lumineux d'une étape temporelle précédente, est effectuée pour chaque étape temporelle dans laquelle l'émission est synchronisée au moyen du dispositif de projection (22).

3. Procédé selon la revendication 1 ou 2,
**caractérisé en ce que**
l'interaction physique virtuelle concerne un objet (8) décrit par les données de mesure, notamment un piéton (9), dans l'environnement.

4. Procédé selon la revendication 3,
**caractérisé en ce que**
l'interaction physique virtuelle comprend une force d'attraction et/ou une force de répulsion entre l'objet (8) et au moins l'une des caractéristiques polygonales auxquelles est associée une propriété physique, et/ou **en ce que** l'interaction physique virtuelle décrit un apport d'énergie virtuelle et/ou un retrait d'énergie virtuel qui est représenté par l'éclaircissement ou l'assombrissement de la luminosité de projection des surfaces polygonales (3) et/ou une augmentation ou un ralentissement de la vitesse de déplacement de l'au moins une caractéristique polygonale, notamment d'au moins un sommet (2), et/ou **en ce que** l'interaction physique virtuelle concerne une adhérence d'au moins l'un des sommets (2) à l'objet (8).

5. Procédé selon la revendication 3 ou 4,
**caractérisé en ce que**
une information de sortie sonore est associée à au moins un événement d'interaction de l'interaction physique virtuelle, notamment un contact entre au moins l'une des caractéristiques polygonales et l'objet (8), laquelle est émise lors de la survenance de l'événement d'interaction au moyen d'un moyen de sortie sonore (29) agissant vers l'extérieur du véhicule automobile (20) et/ou au moyen d'un moyen de sortie acoustique (30) agissant sur un espace intérieur (31) du véhicule automobile (20).

6. Procédé selon l'une des revendications précédentes,
**caractérisé en ce que**
au moins une caractéristique environnementale décrit un état environnemental, notamment une condition météorologique.

7. Procédé selon l'une des revendications précédentes,
**caractérisé en ce que**
les informations d'adaptation sont déterminées en tenant compte en plus d'au moins une information supplémentaire (7) relative à une fonction du véhicule.

8. Procédé selon la revendication 7,
**caractérisé en ce que**
l'information supplémentaire (7) décrit une transition souhaitée, par une fonction du véhicule, qui prédéfinit notamment au moins partiellement le motif lumineux, d'une zone d'éclairage actuelle (12) du motif lumineux dans la zone de projection vers une nouvelle zone d'éclairage (13) du motif lumineux dans la zone de projection, la transition s'effectuant sur plusieurs étapes temporelles par un mouvement et/ou un ajout et/ou un retrait de surfaces polygonales (3) en vue de former la nouvelle zone d'éclairage (13), laquelle est décrite par une séquence d'informations d'adaptation.

9. Procédé selon la revendication 7 ou 8,
**caractérisé en ce que**
la fonction du véhicule est une fonction de conduite qui permet le guidage entièrement automatique du véhicule automobile (20).

10. Procédé selon l'une des revendications précédentes,
**caractérisé en ce que**
une zone d'éclairage à utiliser (12, 13) de la zone de projection est prédéfinie par une fonction d'éclairage du véhicule automobile (20), laquelle zone est plus petite que le réseau polygonal (6), une partie à représenter du réseau polygonal (6) étant déterminée par superposition avec la zone d'éclairage (12, 13) à utiliser et seule cette partie étant projetée.

11. Procédé selon l'une des revendications précédentes,
**caractérisé en ce que**
pour la détermination initiale du réseau polygonal (6) du motif lumineux
- un nuage de points décrivant des sommets (2) à l'intérieur de la zone de projection est généré par une fonction de génération,
- les surfaces polygonales (3) sont définies par une fonction de liaison des sommets (2), et
- des luminosités de projection sont associées aux surfaces polygonales (3) une fonction d'association.

12. Procédé selon la revendication 11,
**caractérisé en ce que**
l'algorithme de génération comprend un échantillonnage de disques de Poisson, notamment un algorithme de Bridson, et/ou **en ce que** des triangles sans intersection avec maximisation de l'angle minimal des triangles sont définis en tant que surfaces polygonales (3), notamment au moyen d'une triangulation de Delaunay, et/ou les valeurs de luminosité de projection sont associées sur la base d'un premier bruit de gradient au moins bidimensionnel.

13. Procédé selon l'une des revendications précédentes,
**caractérisé en ce que**
les informations d'adaptation sont adaptées en tenant compte en plus d'une dynamique de base virtuelle randomisée et/ou physique qui est superposée à l'interaction physique virtuelle.

14. Procédé selon la revendication 13,
**caractérisé en ce que**
le mouvement des sommets (2) s'effectue dans le cadre de la dynamique de base sur la base d'un deuxième bruit de gradient bidimensionnel, en adaptant une trajectoire circulaire (17) prévue pour le mouvement par le deuxième bruit de gradient.

15. Véhicule automobile (20) comprenant un arrangement phare (21), l'arrangement phare (21) possédant un dispositif de projection (22) et une unité de commande (24) qui est configurée pour commander le dispositif de projection (22) en vue de projeter un motif lumineux prédéfini dans une zone de projection prédéterminée du dispositif de projection (22), le motif lumineux, dans un mode de fonctionnement polygonal de l'arrangement phare (21), comprenant un réseau polygonal (6) avec des surfaces polygonales (3) présentant des arêtes polygonales et définies par des points de projection en tant que sommets (2), et des luminosités de projection au moins partiellement différentes étant associées aux surfaces polygonales (3),
**caractérisé en ce que**
l'unité de commande (24) est configurée pour mettre en œuvre un procédé selon l'une des revendications précédentes.
